# EUROPEAN PATENT APPLICATION

(11) **EP 4 122 984 A1**
(43) Date of publication of application: **25.01.2023**
(21) Application number: 21187220.5
(22) Date of filing: 22.07.2021
(51) Int. Cl.: C08L 9/06, B60C 1/00, C08K 3/36, C08L 21/00

(54) **RUBBER COMPOSITIONS**

(71) Applicant: Bridgestone Europe NV/SA, 1932 Zaventem (BE)
(72) Inventor: AURISICCHIO, Claudia, 00128 Roma (IT); DI RONZA, Raffaele, 00128 Roma (IT); BASILE, Alessandro, 00128 Roma (IT)
(74) Representative: Marchetti, Alessio

(57) **Abstract**

The invention provides rubber compositions comprising:
a diene rubber component; and
a filler system, wherein the filler system comprises:
a first silica which is surface-functionalised and has a BET specific surface area of from 250 to 310 m²/g and a CTAB specific surface area of from 230 to 285 m²/g; and
a second silica which is not surface-functionalised and has a BET specific surface area of from 60 to 120 m²/g and a CTAB specific surface area of from 55 to 105 m²/g.

The rubber compositions are particularly suitable for use in the production of tire components, in particular tire treads.

## Description

### Field of the Invention

The present invention relates to rubber compositions, to methods for their preparation and to their use in the manufacture of vehicle tires and vehicle tire components. In particular, it relates to the use of such compositions to produce tire treads. The invention additionally relates to rubber products and vehicle tires made from these rubber compositions.

More specifically, the invention relates to rubber compositions that contain a reinforcing filler system comprising a combination of two different silica fillers. When used as a reinforcing filler in diene rubber compositions, this filler system improves the balance of wet performance, rolling resistance, and wear resistance properties.

### Background of the Invention

There is a demand for vehicles with lower fuel consumption in order to reduce CO₂ emissions. A lower rolling resistance in vehicle tires can reduce fuel consumption and is therefore desirable. It is also important for tires to have a good grip performance on both dry and wet surfaces, especially on wet road surfaces (i.e. wet performance). A high wear resistance is also an important factor for a long service life of the tire. Together, the wet performance ("WET"), rolling resistance ("RR"), and wear resistance ("WEAR") are known as the 'magic triangle' of viscoelastic properties. However, it is very difficult to improve grip performance of a tire without adversely affecting the rolling resistance and wear resistance and there is an ongoing need to produce tires having an improved balance between these properties.

The components of rubber compositions used in the production of tires can be modified in order to adjust their dynamic/mechanical properties. Typically, this may involve the use of modified rubbers, mixtures of rubbers and/or the incorporation of reinforcing fillers in the rubber composition.

Diene rubbers, such as natural rubber, isoprene rubber and butadiene rubber, comprise repeat units derived from diolefins having a conjugated carbon-carbon double bond. The properties of synthetic diene rubbers can be specifically tailored by copolymerisation of diolefin monomers with other monomers and they are used in a wide range of applications. Diene rubbers, including butadiene rubber (BR), natural rubber (NR), isoprene rubber (IR), styrene-butadiene rubber (SBR), epoxidised natural rubber (ENR), acrylonitrile-butadiene rubber (NBR), chloroprene rubber (CR), isobutylene-isoprene rubber (IIR), styrene-isoprene-butadiene rubber (SIBR) and ethylene-propylene-diene rubber (EPDM) are commonly used to produce components in the automotive industry, for example components of car tires such as tire treads.

The mechanical properties of rubber compounds made from diene rubbers are improved by the incorporation of reinforcing fillers, such as silica and carbon black. Carbon black was the first material in common use as a filler, but more recently silica has largely replaced the traditional use of carbon black. The use of silica fillers improves rubber properties such as lowering rolling resistance and improving traction, particularly on wet surfaces.

Dispersion of any reinforcing filler and the filler-rubber interaction are key when preparing high performance rubber compounds having the required mechanical properties. The presence of polar silanol groups on the surface of silica makes it acidic and moisture adsorbing which can lead to its aggregation and thus poor dispersion in the rubber matrix, causing high compound viscosity and loss of reinforcing properties. Various in-situ treatments of silica have been proposed to tailor its surface chemistry, such as the use of silanes as surface modifiers or "covering agents". Silane coupling agents are also used to form covalent bonds between silica and diene rubber chains when compounding rubber. These improve filler dispersion in the diene rubber matrix and strengthen the interaction between silica and rubber to reinforce the rubber compounds. Surface-modified silica gels for use as reinforcing agents in hydrocarbon rubbers are described in
WO 03/097737, for example.

The use of high reinforcing grades of silica is generally known to improve the wear resistance of tire tread rubber, whereas less reinforcing grades of silica are known to improve wet performance and rolling resistance. To take advantage of these different properties, US Patent No. 6,506,829 proposes the use of a blend of high and low reinforcing grade silicas that are characterised by their different pore size distribution maximum ("PSD") and average specific surface area ("SSA"). A rubber composition containing a 1:1 blend of Z1165MP (a high reinforcing grade silica sold by Rhodia; 175 m²/g BET SSA and 35 nm PSD) and Z1115MP (a low reinforcing grade silica sold by Rhodia; 125 m²/g BET SSA and 60 nm PSD) is disclosed. The composition is shown to have high tensile strength and high hardness predicting beneficial handling properties and improved traction. High rebound values at 100°C are beneficial for rolling resistance and a low rebound value at 23°C is beneficial for wet grip properties.

In the pursuit of alternative silica fillers for rubber compositions having improved dynamic properties, precipitated silicas have been proposed which are pre-functionalised. For example, WO 2015/121333 proposes a novel process for preparing precipitated silica which involves the use, during or after liquefaction of the precipitated silica, of at least one polycarboxylic acid.

An important contribution to energy dissipation and hence rolling resistance in tire treads results from free ends of polymer chains and from the degradation of the filler network formed by the filler. The introduction of functional groups at the end of the polymer chains enables physical or chemical attachment of these ends to the filler surface. This has led to the proposed use of various end group modifications of polymers using functional groups such as carboxyl groups and silanes. The introduction of carboxyl groups by means of silanes has also been described, for example in WO 2014/173706.

There is a continuing need in the art to provide tires in which wet performance, rolling resistance and wear resistance are improved. In particular, there is a need to produce tires having an improved balance of WET/RR properties and WEAR performance.

### Summary of the invention

The inventors have found that a diene rubber composition containing a particular blend of silicas has excellent wear resistance, rolling resistance, and wet performance and an outstanding balance between these properties. In particular, they have found that an interactive and/or synergistic effect is observed in respect of these viscoelastic properties of rubber products made from rubber compositions reinforced with a filler system that comprises a surface-functionalised silica (i.e. a "pre-functionalised" silica) in combination with a silica which is not surface-functionalised, i.e. a "non-functionalised" silica or silica that has not been "pre-functionalised". An improvement in these properties is observed compared to corresponding filler systems based on non-functionalised silicas. Furthermore, the inventors have surprisingly found that this effect is observed with a reduced total amount of reinforcing filler.

In one aspect, the invention thus provides a rubber composition comprising:
a diene rubber component; and
a filler system, wherein the filler system comprises:
   a first silica which is surface-functionalised and has a BET specific surface area of from 250 to 310 m²/g and a CTAB specific surface area of from 230 to 285 m²/g; and
   a second silica which is not surface-functionalised and has a BET specific surface area of from 60 to 120 m²/g and a CTAB specific surface area of from 55 to 105 m²/g.

In another aspect, the invention provides a process for producing a rubber composition, said process comprising the step of dispersing a filler system as herein defined in a diene rubber component.

In another aspect, the invention provides a vulcanizable rubber composition comprising a diene rubber component having dispersed therein a filler system as herein defined.

In another aspect, the invention provides a vulcanized rubber compound obtained by, directly obtained by, or obtainable by cross-linking a vulcanizable rubber composition as herein described.

In another aspect, the invention provides a process for producing a vulcanized rubber compound, said process comprising the steps of introducing a silica filler system as herein defined into a diene rubber component whereby to produce a vulcanizable rubber composition; and subjecting said vulcanizable rubber composition to vulcanization by heating to a predetermined temperature and for a predetermined time.

In another aspect, the invention provides the use of a rubber composition as herein described as a component of a vehicle tire or in the manufacture of a component of a vehicle tire.

In another aspect, the invention provides a vehicle tire component made from a rubber composition as herein described.

In another aspect, the invention provides a vehicle tire comprising a vehicle tire component as herein described.

In another aspect, the invention provides a silica filler system comprising:
a first silica which is surface-functionalised and has a BET specific surface area of from 250 to 310 m²/g and a CTAB specific surface area of from 230 to 285 m²/g; and
a second silica which is not surface-functionalised and has a BET specific surface area of from 60 to 120 m²/g and a CTAB specific surface area of from 55 to 105 m²/g.

### Detailed Description of the invention

According to one aspect, the invention provides a rubber composition comprising:
a diene rubber component; and
a filler system, wherein the filler system comprises:
   a first silica which is surface-functionalised and has a BET specific surface area of from 250 to 310 m²/g and a CTAB specific surface area of from 230 to 285 m²/g; and
   a second silica which is not surface-functionalised and has a BET specific surface area of from 60 to 120 m²/g and a CTAB specific surface area of from 55 to 105 m²/g.

The term "rubber", as used herein, is intended to include natural rubber and synthetic rubbers. The terms "rubber" and "elastomer" are used interchangeably herein in the description of the invention, unless otherwise specified. Unless otherwise specified, the terms "rubber composition", "compounded rubber" and "rubber compound" are used interchangeably herein to refer to rubber which has been blended or mixed (i.e. compounded) with various components or materials and such terms are well known and understood in the art.

The invention relates to rubber compositions both in the raw state (i.e. before curing or vulcanization) and in the cured or vulcanized state, i.e. after cross-linking or vulcanization.

In the rubber compositions according to the invention, the silica filler system as herein described is dispersed in a diene rubber component and acts as a reinforcing filler. The term "diene rubber component" refers to an elastomeric matrix that comprises at least one diene rubber. As used herein, the term "diene rubber" refers to a rubber comprising repeat units derived from at least one conjugated diolefin monomer. It includes homopolymers and copolymers having one or more additional units derived from monomers copolymerisable with the diolefin monomer(s). The repeat units have a carbon-carbon double bond that may be present in the backbone and/or in a side-chain of the polymer. A diene rubber may be natural or synthetic.

The filler system for use in the compositions of the invention comprises a first "functionalised" silica and second "non-functionalised" silica having the specific surface area characteristics defined herein. Any reference herein to "silica" or to a "silica filler" refers to particulate silica. Any known type of particulate silica capable of reinforcing a diene rubber component may be used in the invention. As will be understood, known silica materials typically contain a proportion of other components (e.g. as impurities), but the main component will be silicon dioxide, i.e. SiO₂. The content of silicon dioxide will generally be at least 90 wt.%, preferably at least 95 wt.%, e.g. at least 97 wt.%.

The terms "functionalised silica" and "surface-functionalised silica" are used interchangeably herein and are intended to refer to particulate silica having a surface modified by at least one functional group. The terms "non-functionalised silica" and "silica which is not surface-functionalised" are used interchangeably herein and should be correspondingly construed. Any reference herein to surface functionalisation of silica, or to the absence of surface functionalisation of silica, refers to the nature of the particulate silica added to the diene rubber component in the production of a rubber composition. Thus, a "surface-functionalised" silica refers to a "pre-functionalised" silica. Similarly, any "silica which is not surface-functionalised" refers to particulate silica that has not been "pre-functionalised". More specifically, the "functionalised silica" for use in the invention is a particulate silica surface-modified with one or more of the functional groups as herein described, such as one or more carboxyl groups. Analogously, the "silica which is not surface-functionalised" is a particulate silica which does not carry any of the functional groups herein described, such as any carboxyl groups.

Silica materials for use in the invention are well known in the art and include, in particular, precipitated silica (an amorphous form of silica), pyrogenic (fumed) silica, wet silica (hydrous silicic acid), dry silica (silicic anhydride), calcium silicate and aluminium silicate. The silica materials are used in the form of discrete particles, e.g. as a granulate which is highly dispersible. Such materials may be monodisperse in size and uniform in shape. Alternatively, they may be provided in the form of branched or linear clusters. Precipitated silica materials are preferred for use in the invention.

The filler system for use in the invention comprises a first silica that is functionalised at its surface with one or more functional groups. This "first silica" is also referred to herein as the "functionalised silica". It may also be referred to as a high reinforcing grade silica.

The first silica is characterised by a Brunauer-Emmett-Teller (BET) specific surface area of from 250 to 310 m²/g. The Brunauer-Emmett-Teller (BET) specific surface area is preferably from 270 to 300 m²/g, more preferably 280 to 290 m²/g, for example 280, 281, 282, 283, 284, 285, 286, 287, 288, 289 or 290 m²/g. The first silica has a surface area by cetyltrimethylammonium bromide (CTAB) adsorption of from 230 to 285 m²/g. The surface area by cetyltrimethylammonium bromide (CTAB) adsorption is preferably from 240 to 270 m²/g, more preferably from 245 to 265 m²/g, yet more preferably from 250 to 260 m²/g, for example 250, 251, 252, 253, 254, 255, 256, 257, 258. 259 or 260 m²/g.

The filler system also comprises a second silica. This second silica is not surface-functionalised. It is a low reinforcing grade silica.

The second silica is characterised by a Brunauer-Emmett-Teller (BET) specific surface area in the range of from 60 to 120 m²/g, preferably from 70 to 110 m²/g, for example from 80 to 100 m²/g. The second silica has a surface area by cetyltrimethylammonium bromide (CTAB) adsorption of from 55 to 105 m²/g. The surface area by cetyltrimethylammonium bromide (CTAB) adsorption is preferably from 60 to 100 m²/g, more preferably from 70 to 95 m²/g, yet more preferably from 80 to 90 m²/g, for example 80, 81, 82, 83, 84, 85, 86, 87, 88, 89 or 90 m²/g.

The average specific surface area is determined by N₂ adsorption according to the Brunauer-Emmett-Teller (BET) method and by cetyltrimethylammonium bromide (CTAB) adsorption. The CTAB specific surface area is the external surface. The Brunauer-Emmet-Teller (BET) method is described in the Journal of the American Chemical Society, Vol. 60, page 309, February 1938, and corresponding to standard NF ISO 5794-1, Appendix D (June 2010). The cetyltrimethylammonium bromide (CTAB) adsorption method corresponds to ASTM D6845.

In one embodiment, the BET specific surface area of the first silica differs from that of the second silica by at least 250 m²/g. Preferably, the BET specific surface area of the first silica differs from that of the second silica by at least 220 m²/g, more preferably at least 190 m²/g, for example at least 175, 180, 185, 190, 195, 200 or 205 m²/g.

In one embodiment, the CTAB specific surface area of the first silica differs from that of the second silica by at least 230 m²/g. Preferably, the CTAB specific surface area of the first silica differs from that of the second silica by at least 200 m²/g, more preferably at least 170 m²/g, for example at least 155, 160, 165, 170, 175, 180 or 185 m²/g.

The first silica is surface-modified by the introduction of one or more functional groups. Examples of functional groups include carboxyl groups, hydroxyl groups, and carbonyl groups. Where appropriate, any of these groups may be present in the form of their corresponding salts or derivatives. Any functional group will typically be present as a substituent group of an organic compound, for example a low molecular weight organic compound. Depending on the nature of the organic compound, the functional group may thus effectively be "linked" to the silica surface by an organic linking group. The organic compound may be selected to provide any desirable linking group, for example in terms of the chain length of the linking group.

In some embodiments, the first silica is functionalised at its surface with an organic compound that comprises one or more functional groups selected from carboxyl, hydroxyl, carbonyl and, where appropriate, any salts or derivatives thereof. The compound may comprise 2, 3, 4 or more such functional groups, for example it may be a bifunctional compound or a trifunctional compound. The plurality of functional groups in the compound may be the same or different, but typically they will be the same. The organic compound may be a linear or branched, saturated or unsaturated, aliphatic compound containing from 2 to 20 carbon atoms or it may be an aromatic compound. The aliphatic organic compound may comprise heteroatoms on the main chain, for example nitrogen or sulphur. The organic compound may be selected from the group consisting of linear, branched, saturated, unsaturated, aliphatic compounds containing from 2 to 16 carbons and aromatic compounds.

The aliphatic compounds may be linear, saturated or unsaturated and may contain from 2 to 14 carbon atoms, for example from 2 to 12 carbon atoms. The compounds may contain 2, 3, 4, 5, 6, 7, 8, 9, 10, 11 or 12 carbon atoms. Advantageously, the compounds may contain 4, 5, 6, 7, 8, 9 or 10 carbon atoms, for example 4, 5, 6, 7 or 8 carbon atoms. The compound may contain 4, 5 or 6 carbon atoms.

In one set of embodiments, the functionalised silica may comprise a silica functionalised at its surface with one or more carboxyl groups. The carboxyl groups may be present as carboxylic acids and/or as derivatives thereof such as salts or esters.

The carboxyl groups of the functionalised silica may be derived from one or more carboxylic acids or derivatives thereof, for example one or more polycarboxylic acids. As used herein, the term "polycarboxylic acid" means a carboxylic acid containing at least two carboxylic acid functional groups (i.e. -COOH).

The one or more polycarboxylic acids may contain 2, 3, 4 or more than 4 carboxylic acid functional groups. For example, the polycarboxylic acid may be a dicarboxylic acid or tricarboxylic acid. The polycarboxylic acid may be a linear or branched, saturated or unsaturated, aliphatic polycarboxylic acid containing from 2 to 20 carbon atoms or it may be an aromatic polycarboxylic acid. The polycarboxylic acid may optionally comprise hydroxyl groups and/or halogen atoms. The aliphatic polycarboxylic acid may comprise heteroatoms on the main chain, for example nitrogen or sulphur. The polycarboxylic acid may be one or more selected from the group consisting of linear, branched, saturated, unsaturated, aliphatic polycarboxylic acids containing from 2 to 16 carbons and aromatic polycarboxylic acids.

The aliphatic polycarboxylic acids may be made of linear, saturated or unsaturated polycarboxylic acids containing from 2 to 14 carbon atoms, for example from 2 to 12 carbon atoms. The polycarboxylic acid may contain 2, 3, 4, 5, 6, 7, 8, 9, 10, 11 or 12 carbon atoms. Advantageously, the polycarboxylic acid may contain 4, 5, 6, 7, 8, 9 or 10 carbon atoms, for example 4, 5, 6, 7 or 8 carbon atoms. For example, the polycarboxylic acid may contain 4, 5 or 6 carbon atoms.

Examples of linear aliphatic polycarboxylic acids that may be used include, but are not limited to, oxalic acid, malonic acid, tricarballylic acid, succinic acid, glutaric acid, adipic acid, pimelic acid, suberic acid, azelaic acid, and sebacic acid.

Examples of branched aliphatic polycarboxylic acids that may be used include, but are not limited to, methylsuccinic acid, ethylsuccinic acid, oxalosuccinic acid, methyladipic acid, methylglutaric acid, and dimethylglutaric acid. The term "methylglutaric acid" includes both 2- and 3-methylglutaric acid and any mixture of these two isomers in any proportion. The term "2-methylglutaric acid" incudes both the (S) and (R) forms of the compound and any racemic mixture.

Examples of unsaturated polycarboxylic acids that may be used include, but are not limited to, maleic acid, fumaric acid, itaconic acid, muconic acid, aconitic acid, traumatic acid and glutaconic acid.

Examples of polycarboxylic acids that also include hydroxyl groups that may be used include, but are not limited to, malic acid, citric acid, isocitric acid and tartaric acid.

Examples of aromatic polycarboxylic acids that may be used include, but are not limited to, phthalic acid, orthophthalic acid, isophthalic acid, trimesic acid and trimellitic acid.

Preferably, the polycarboxylic acid may be one or more selected from the group consisting of oxalic acid, malonic acid, tricarballylic acid, succinic acid, glutaric acid, adipic acid, pimelic acid, suberic acid, azelaic acid, sebacic acid, methylsuccinic acid, ethylsuccinic acid, methyladipic acid, methylglutaric acid, dimethylglutaric acid, malic acid, citric acid, isocitric acid and tartaric acid. More preferably, the polycarboxylic acid is one or more selected from the group consisting of adipic acid, succinic acid, ethylsuccinic acid, glutaric acid, methylglutaric acid, oxalic acid, and citric acid.

In one embodiment, a single type of polycarboxylic acid may be employed. In this case, the polycarboxylic acid is preferably methylglutaric acid.

In another embodiment, a mixture of polycarboxylic acids is employed. In this case, the polycarboxylic acids in the mixture may be selected from dicarboxylic and/or tricarboxylic acids. For example, the polycarboxylic acids may be selected from adipic acid, succinic acid, ethylsuccinic acid, glutaric acid, methylglutaric acid, oxalic acid and citric acid. As will be understood, mixtures of polycarboxylic acids may arise from the methods which are used in their manufacture.

Some or all of the polycarboxylic acids for use in the invention may be used in the form of salts or derivatives thereof. For examples these may be used in the form of an ester, an anhydride, alkali, alkaline earth metal or ammonium salt (i.e. carboxylate). Examples of salts include those formed with sodium, potassium or calcium.

Further examples of types of polycarboxylic acids, derivatives thereof and mixtures thereof for use in the invention can be found in WO 2015/12133, along with methods for the preparation of functionalised silicas which incorporate these compounds.

The functionalised silica may have a carbon content of at least 0.10% by weight of the functionalised silica. The carbon content (denoted (C)) is the carbon content of the organic compound (e.g. the carboxylic acid plus corresponding salts or derivatives), expressed as total carbon. It can be measured using a carbon-sulfur analyser, such as the Horiba EMIA 320 V2 machine, as described herein. The carbon content may preferably be at least 0.15% by weight, more preferably at least 0.20% by weight, yet more preferably at least 0.25% by weight, for example at least 0.30% by weight of the functionalised silica.

The functionalised silica may have an object size distribution width ratio Ld of at least 0.91. The object size distribution width ratio Ld is preferably at least 0.94. As used herein, object size distribution width ratio is the object size distribution width ratio (Ld), measured by X-Ray Disc Centrifuge (XDC) particle size analysis, after ultrasound deagglomeration (in water), and corresponds to the ratio (d84-d16)/d50, in which dn is the size for which n% of particles (by mass) are smaller than this size (the distribution width Ld is thus calculated on the cumulative particle size curve, taken in its entirety). The size distribution width Ld of objects smaller than 500 nm, measured by XDC particle size analysis, after ultrasound deagglomeration (in water), corresponds to the ratio (d84-d16)/d50 in which dn is the size for which n% of particles (by mass), relative to the particles smaller than 500 nm, are smaller than this size (the distribution width Ld is thus calculated on the cumulative particle size curve, truncated above 500 nm). Object size distribution width as used herein is measured according to the method described in WO 2015/121333.

The functionalised silica may have a pore volume distribution ratio of at least 0.65. The pore volume distribution is preferably at least 0.66, more preferably at least 0.68. Pore volumes and pore diameters are measured by mercury (Hg) porosimetry using a Micromeritics Autopore 9520 porosimeter and are calculated by the Washburn relationship with a contact angle theta equal to 140° and a gamma surface tension equal to 484 dynes/cm (standard DIN 66133). The preparation of each sample is performed as follows: each sample is pre-dried in an oven at 200°C for 2 hours. As used herein, pore volume distribution ratio is the pore volume distribution such that the ratio V(d5 - d50)/V(d5 - d100) is at least 0.65, preferably at least 0.66, more preferably at least 0.68. V(d5 - d50) represents the pore volume consisting of pores between d5 and d50 in diameter, and V(d5 - d100) represents the pore volume consisting of pores between d5 and d100 in diameter, dn being here the pore diameter for which n% of the total surface area of all the pores is provided by the pores with a diameter greater than this diameter (the total surface area of the pores (S0) may be determined from the mercury intrusion curve). Pore volume distribution ratio as used herein is measured according to the method described in WO 2015/121333.

In one set of embodiments, the first silica for use in the invention is additionally characterised by one or more of the following properties:
- a carbon content of at least 0.10 wt.% by weight of the functionalised silica;
- an object size distribution width ratio (Ld) of at least 0.91; and
- a pore volume distribution ratio of at least 0.65.

In another set of embodiments, the first silica for use in the invention is additionally characterised by:
- a carbon content of at least 0.10 wt.% by weight of the functionalised silica; and
- an object size distribution width ratio (Ld) of at least 0.91; and
- a pore volume distribution ratio of at least 0.65.

The functionalised silica may have a pH of from 2.5 to 7, preferably between 2.5 to 5, more preferably between 3 to 4.5, for example, 3.0, 3.1, 3.2, 3.3, 3.4, 3.5, 3.6, 3.7, 3.8, 3.9, 4.0, 4.1, 4.2, 4.3, 4.4, or 4.5. In particular, the silica functionalised with one or more carboxyl groups, salts or derivatives thereof, may have a pH of from 2.5 to 7, preferably between 2.5 to 5, more preferably between 3 to 4.5, for example, 3.0, 3.1, 3.2, 3.3, 3.4, 3.5, 3.6, 3.7, 3.8, 3.9, 4.0, 4.1, 4.2, 4.3, 4.4, or 4.5. pH may be measured according to the method described in WO 2015/121333 which is derived from standard ISO 787/9 (pH of a 5% suspension in water).

Functionalised silicas are either known in the art or may be prepared using methods known in the art. The precise method will depend on the nature of the functional group but can readily be selected by those skilled in the art. Where the silica is functionalised with one or more carboxyl groups, the carboxyl groups may be derived by reacting a silica with one or more carboxylic acids to form the functionalised silica. Typically, the method will involve a precipitation reaction to produce the silica, i.e. the first silica will be a precipitated silica. The precipitated silica may be in any physical state, for example it may be in the form of substantially spherical beads (e.g. microbeads), or it may be in the form of a powder or granules.

The synthesis of silica functionalised with one or more carboxyl groups is disclosed in WO 2015/121333, for example, the entire content of which is incorporated herein by reference. Generally, the preparation of functionalised silica is performed by a precipitation reaction of a silicate, such as an alkali metal silicate (for example sodium silicate), with an acidifying agent (for example sulfuric acid), then separation by filtration with production of a filter cake of the precipitated silica obtained, followed by liquefaction of said filter cake and, finally, drying (generally by atomization). The silica can be precipitated in any mode, in particular, addition of the acidifying agent to a silicate feedstock or total or partial simultaneous addition of acidifying agent and of silicate to a feedstock of water or silicate. One or more of polycarboxylic acids are added to the filter cake, either during the liquefaction operation, or after the liquefaction operation and before the drying step.

In one embodiment, the functionalised silica may thus be prepared by a method comprising the following steps:
- reacting a silicate with an acidifying agent whereby to obtain a suspension of precipitated silica;
- filtering the suspension of precipitated silica to provide a filter cake of the precipitated silica;
- subjecting said filter cake to liquefaction; and
- drying the liquefacted filter cake;
wherein an organic compound having one or more functional groups as herein defined (e.g. at least one polycarboxylic acid) is added to the filter cake either during liquefaction, or after liquefaction and prior to drying.

The resulting precipitated silica will generally be provided in the form of a dry powder. The precipitated silica will have at its surface molecules of the organic compound, for example molecules of the polycarboxylic acid(s) or its salt(s) or derivative(s). The presence of polycarboxylic acids, salts or derivatives thereof may be established by known techniques such as surface Infra-red or diamond-ATR (Attenuated Total Reflection) Infra-red. Depending on the source of the starting materials used to produce the silica, the precipitated silica may contain additional elements such as aluminium.

The second silica for use in the filler system herein described is non-functionalised. It may comprise any silica generally known in the art including precipitated amorphous silica, wet silica (hydrated silicic acid), dry silica (anhydrous silicic acid), fumed silica, calcium silicate, aluminium silicate, magnesium silicate (e.g. Mg₂SiO₄, MgSiO₃), magnesium calcium silicate (CaMgSiO₄), or aluminium calcium silicate (e.g. Al₂O₃-CaO₂SiO₂). Commercial grades of silica which conform to the above requirements in respect of BET and CTAB are widely available. These include the silica supplied by Solvay under the trade name Zeosil^{®} 1085 GR. This has a BET specific surface area of 90 m²/g ± 20 m²/g and a CTAB specific surface area of 80 m²/g ± 15 m²/g.

In some embodiments, the silica surface of the first and/or second silica may also be surface-treated to decrease the filler-filler interaction during compounding and thus to improve their dispersibility in the rubber component. Covering agents suitable for this purpose are well known in the art and include, but are not limited to, monofunctional silanes such as hexadecyltrimethoxysilane or propyltriethoxysilane. As herein described, such covering agents may be introduced when compounding the various components to form the rubber composition.

The weight ratio of the second silica to the first silica (i.e. the weight of the second silica divided by the weight of the first silica) may vary. Advantageously, the weight ratio between the second silica and the first silica is in the range from 0.15 to 0.60, preferably from 0.25 to 0.45. In some embodiments the weight ratio may be 0.15, 0.31, 0.42 or 0.56.

The filler system described herein forms a further aspect of the invention. In another aspect, the invention thus provides a filler system comprising:
a first silica which is surface-functionalised and has a BET specific surface area of from 250 to 310 m²/g and a CTAB specific surface area of from 230 to 285 m²/g; and
a second silica which is not surface-functionalised and has a BET specific surface area of from 60 to 120 m²/g and a CTAB specific surface area of from 55 to 105 m²/g.

The silica system for use in the invention is dispersed in a diene rubber component. The amount of the silica system (i.e. the combined weight of the first and second silicas) is not particularly limited and may readily be selected by those skilled in the art. Typically, however, the filler system may be present in a range from 90 to 130 phr, preferably from 100 to 120 phr, more preferably from 100 to 115 phr, with respect to 100 phr of the rubber composition.

The first silica may be present in a range from 55 to 120 phr, preferably from 55 to 100 phr, more preferably from 65 to 90 phr, with respect to 100 phr of the rubber composition. The second silica may be present in a range from 10 to 40 phr, preferably from 20 to 40 phr, more preferably from 20 to 35 phr, with respect to 100 phr of the rubber composition.

Any known diene rubber component may be used in the rubber compositions according to the invention and those skilled in the art can readily select a suitable rubber having in mind the intended use of the composition. Diene rubbers are well known in the art and include both natural and synthetic rubbers. Non-limiting examples of such rubbers include butadiene rubber (BR), natural rubber (NR), isoprene rubber (IR), epoxidized natural rubber (ENR), acrylonitrile-butadiene rubber (NBR), chloroprene rubber (CR), isobutylene-isoprene rubber (IIR), styrene-butadiene rubber (SBR), styrene-isoprene-butadiene rubber (SIBR) and ethylene-propylene-diene rubber (EPDM).

In one embodiment, the diene rubber for use in the invention contains repeat units derived from butadiene. Examples of such rubbers include, but are not limited to, styrene butadiene rubber (SBR) and butadiene rubber (BR). In one set of embodiments, the diene rubber for use in the invention is SBR. Styrene-butadiene rubber is well-known in the art. The term "styrene-butadiene rubber" or "SBR", as used herein, is intended to refer generally to any synthetic rubber made by polymerisation of styrene and butadiene monomers. It thus refers to any styrene-butadiene copolymer. SBR is commonly used in the tire industry and can be made by well-known methods, such as by co-polymerisation of the corresponding monomers in emulsion, suspension or in solution. Styrene and butadiene monomers may be selected in suitable ratios according to the intended use and properties of the rubber compound. For example, styrene may be present in an amount of up to 80 wt.%, more typically up to about 45 wt.% for rubber tire tread compounds (wt.% based on the total weight of the comonomers). In some embodiments, styrene may be present in an amount of from 10 wt.% to 30 wt.% by weight of the SBR rubber diene, preferably 15 wt.% to 25 wt.%, more preferably 21 wt.% to 24 wt.%, for example, 21 wt.%, 22 wt.% or 23 wt.%. The diene component will generally be present in an amount of at least 50 wt.%, for example in an amount of from 50 wt.% to 75 wt.%.

Diene rubbers can be modified with one or more functional groups and any such functionalised diene rubbers may be used in the invention. Alternatively, the diene rubber for use in the invention may be unmodified (i.e. it lacks any additional functional groups).

Where the diene rubber is functionalised, any of its polymer backbone, terminal groups and/or side chains may be bound to one or more functional groups. These functional groups may be incorporated into the polymer material during its production or, alternatively, they may be subsequently grafted onto the polymer. The type and position of any functional groups varies in different rubber grades known in the art. The choice of any functionalised rubber will depend on the intended use of the rubber compounds herein described. Examples of functionalised diene rubbers include those carrying one or more reactive groups, for example groups capable of reaction with a silica coupling agent such as a sulfur-containing organosilicon compound. Representative functional groups include halogens such as CI and Br; alkoxy groups such as methoxy; siloxy groups; and pseudohalogens such as -SCN. In one embodiment, the rubber may be a siloxy-terminated polymer, such as a siloxy-terminated styrene butadiene copolymer. Functional groups may also include one or more interacting groups, for example amino groups. Interacting groups such as amino groups may, for example, form hydrogen bonds within the rubber matrix.

Important contributions to energy dissipation and hence to rolling resistance in tire treads results from the presence of free ends of the polymer chains and from the degradation of the filler network formed by the silica filler which is used in the rubber composition. Advantageously, polymers having functional groups at the end and/or start of the polymer chains which enable these to physically or chemically attach to the filler surface may therefore be employed in the invention. These restrict the mobility of the polymers and hence reduce energy dissipation under dynamic stress. They also function to improve dispersion of the filler in the rubber composition which can lead to strengthening of the filler network and hence to further lower of the rolling resistance.

Thus, in some embodiments, the diene rubber component for use in the invention comprises an end-group functionalised diene rubber compound which may have an interactive and/or synergistic impact on the properties of the rubber compositions and give rise to advantageous properties. Specifically, an interaction between the end-group functionalised diene rubber compound and the functionalised silica, which may be synergistic, may result in improved dispersion of the filler system (in particular the functionalised silica filler which is provided in this system) in the rubber compositions and products made therefrom. An "end-group functionalised" rubber may also be referred to as a "terminal-modified" rubber. In one embodiment, the diene rubber component may be an end-group functionalised SBR, for example an end-group functionalised SSBR.

End-group functionalised rubbers are well known in the art and any of these may be selected for use in the invention. Examples of such rubbers include those described in WO 2014/173706 and in EP 3 725 837, the entire contents of which are incorporated herein by reference.

Modifying functional groups include any functional group that has an affinity for the silica filler. Preferably, it may contain at least one atom selected from a nitrogen atom, a silicon atom, an oxygen atom and a tin atom. Those containing a nitrogen atom, a silicon atom or an oxygen atom are preferred in view of their ability to strongly interact with a silica filler. Functional groups which contain a silicon atom are preferred, for example those having a silicon-carbon bond. Such modifying functional groups may be formed using a suitable coupling agent such as any of those described in EP 3 725 837. Methods for introducing a modifying functional group into the rubber component are well known in the art and may be appropriately selected. These include the use of a functional group-containing polymerization initiator, copolymerizing a functional group-containing monomer with another compound, and reacting a modifying functional agent with terminal groups of the rubber component.

In some embodiments, the modifying functional group contains a nitrogen atom. Examples thereof include substituted amino groups represented by general formula (I) and cyclic amino groups represented by general formula (II): 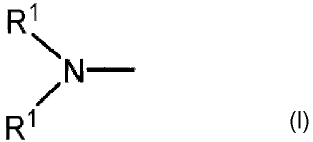 wherein each R¹, which may be the same or different, is an alkyl group, a cycloalkyl group, or an aralkyl group having from 1 to 12 carbon atoms. Preferably, the alkyl group is a methyl group, an ethyl group, a butyl group, an octyl group, or an isobutyl group. The cycloalkyl group is preferably a cyclohexyl group, and the aralkyl group is preferably a 3-phenyl-1-propyl group. 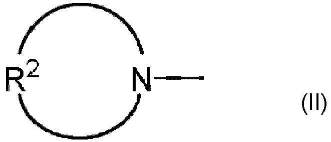 wherein R² is an alkylene group, a substituted alkylene group, an oxy-alkylene group, or a N-alkylamino-alkylene group having from 3 to 16 methylene groups. The substituted alkylene group includes mono-substituted to octa-substituted alkylene groups, and examples of substituents include a linear or branched chain alkyl group, a cycloalkyl group, a bicycloalkyl group, an aryl group, or an aralkyl group having from 1 to 12 carbon atoms. The alkylene group is preferably a trimethylene group, a tetramethylene group, a hexamethylene group, or a dodecamethylene group, the substituted alkylene group is preferably a hexadecamethylene group, the oxyalkylene group is preferably an oxydiethylene group, and the N-alkylamino-alkylene group is preferably an N-alkylazadiethylene group. Examples of the cyclic amino group represented by the general formula (II) include groups in which a hydrogen atom bonded to the nitrogen atom is removed from 2-(2-ethylhexyl)pyrrolidine, 3-(2-propyl)pyrrolidine, 3,5-bis(2-ethylhexyl)piperidine, 4-phenylpiperidine, 7-decyl-1-azacyclotridecane, 3,3-dimethyl-1-azacyclotetradecane, 4-dodecyl-1-azacyclooctane, 4-(2-phenylbutyl)-1-azacyclooctane, 3-ethyl-5-cyclohexyl-1-azacycloheptane, 4-hexyl-1-azacycloheptane, 9-isoamyl-1-azacycloheptadecane, 2-methyl-1-azacycloheptadec-9-ene, 3-isobutyl-1-azacyclododecane, 2-methyl-7-t-butyl-1-azacyclododecane, 5-nonyl-1-azacyclododecane, 8-(4'-methylphenyl)-5-pentyl-3-azabicyclo[5.4.0]undecane, 1-butyl-6-azabicyclo[3.2.1]octane, 8-ethyl-3-azabicyclo[3.2.1]octane, 1-propyl-3-azabicyclo[3.2.2]nonane, 3-(t-butyl)-7-azabicyclo[4.3.0]nonane, and 1,5,5-trimethyl-3-azabicyclo[4.4.0]decane.

In some embodiments, the modifying functional group contains a silicon atom. Examples thereof include modifying functional groups having a silicon-carbon bond that are formed using a coupling agent represented by general formula (III):

(R³)ₐZ(R⁴)_{b} (III)

wherein Z is silicon, each R³ is independently selected from the group consisting of an alkyl group having from 1 to 20 carbon atoms, a cycloalkyl group having from 3 to 20 carbon atoms, an aryl group having from 6 to 20 carbon atoms, and an aralkyl group having from 7 to 20 carbon atoms, each R⁴ is independently chlorine or bromine, a is from 0 to 3, b is from 1 to 4, and a + b = 4. The alkyl group is preferably a methyl group, an ethyl group, a n-butyl group, a n-octyl group, or a 2-ethylhexyl, the cycloalkyl group is preferably a cyclohexyl group, the aryl group is preferably a phenyl group, and the aralkyl group is preferably a neophyl group.

Other modifying functional groups containing a silicon atom include those of general formula (111-1) and general formula (III-2).

R¹ₐ-Si-(OR²)₄₋ₐ (III-1)

In general formula (111-1), R¹ and R² each independently represent a monovalent aliphatic hydrocarbon group having from 1 to 20 carbon atoms or a monovalent aromatic hydrocarbon group having from 6 to 18 carbon atoms, a is an integer of from 0 to 2, when more than one OR² group is present these may be the same or different, and an active proton is not present in the molecule.

Specific examples of the compounds represented by the general formula (111-1) (i.e. alkoxysilane compounds) include tetramethoxysilane, tetraethoxysilane, tetra-n-propoxysilane, tetraisopropoxysilane, tetra-n-butoxysilane, tetraisobutoxysilane, tetra-sec-butoxysilane, tetra-tert-butoxysilane, methyltrimethoxysilane, methyltriethoxysilane, methyltripropoxysilane, methyltriisopropoxysilane, ethyltrimethoxysilane, ethyltriethoxysilane, ethyltripropoxysilane, ethyltriisopropoxysilane, propyltrimethoxysilane, propyltriethoxysilane, propyltripropoxysilane, propyltriisopropoxysilane, butyltrimethoxysilane, butyltriethoxysilane, phenyltrimethoxysilane, phenyltriethoxysilane, dimethoxydimethylsilane, methylphenyldimethoxysilane, dimethyldiethoxysilane, vinyltrimethoxysilane, vinyltriethoxysilane, and divinyldiethoxysilane. Of these, tetraethoxysilane, methyltriethoxysilane and dimethyldiethoxysilane are preferred.

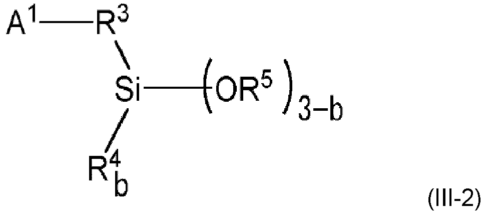

In general formula (111-2), A¹ is a monovalent group having at least one functional group selected from the group consisting of epoxy, glycidyloxy, isocyanate, imine, carboxylate, carboxylic acid anhydride, cyclic tertiary amine, acyclic tertiary amine, pyridine, silazane, and disulfide, R³ is a single bond or a divalent hydrocarbon group, R⁴ and R⁵ are each independently a monovalent aliphatic hydrocarbon group having from 1 to 20 carbon atoms or a monovalent aromatic hydrocarbon group having from 6 to 18 carbon atoms, b is an integer of from 0 to 2, when more than one OR⁵ group is present these may be the same or different, and an active proton is not present in the molecule.

Specific examples of the compounds represented by the general formula (III-2) include epoxy group-containing alkoxysilane compounds, such as 2-glycidyloxyethyltrimethoxysilane, 2-glycidyloxyethyltriethoxysilane, (2-glycidyloxyethyl)methyldimethoxysilane, 3-glycidyloxypropyltrimethoxysilane, 3-glycidyloxypropyltriethoxysilane, (3-glycidyloxypropyl)methyldimethoxysilane, 2-(3,4-epoxycyclohexyl)ethyltrimethoxysilane, 2-(3,4-epoxycyclohexyl)ethyltriethoxysilane, and 2-(3,4-epoxycyclohexyl)ethyl(methyl)dimethoxysilane. Of these, 3-glycidyloxypropyltrimethoxysilane and 2-(3,4-epoxycyclohexyl)ethyltrimethoxysilane are preferred.

Examples of a coupling agent containing silicon which can form a modifying functional group may be appropriately selected. Examples include hydrocarbyloxysilane compounds, SiCl₄ (silicon tetrachloride), (R^{a})SiCl₃, (R^{a})₂SiCl₂, and (R^{a})₃SiCl in which each R^{a} independently represents an alkyl group having from 1 to 20 carbon atoms, a cycloalkyl group having 3 to 20 carbon atoms, an aryl group having 6 to 20 carbon atoms, or an aralkyl group having 7 to 20 carbon atoms.

Preferred for use in the invention is a modifying functional group formed from a coupling agent which is a hydrocarbyloxysilane compound since these have a particularly high affinity for silica. Suitable hydrocarbyloxysilane compounds may be selected by those skilled in the art. Examples include those represented by the following general formula (IV): 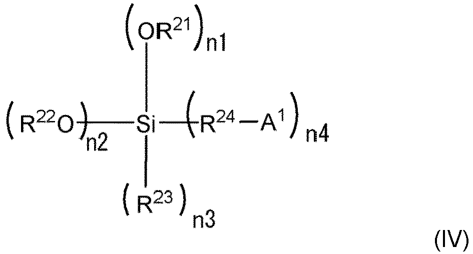 wherein n1 + n2 + n3 + n4 = 4, provided that n2 is an integer from 1 to 4 and n1, n3, and n4 each are an integer of from 0 to 3, and A¹ represents at least one functional group selected from a saturated cyclic tertiary amine compound residue, an unsaturated cyclic tertiary amine compound residue, a ketimine residue, a nitrile group, a (thio)isocyanate group (representing an isocyanate group or a thioisocyanate group), a (thio)epoxy group, a trihydrocarbyl isocyanurate group, a dihydrocarbyl carbonate group, a nitrile group, a pyridine group, a (thio)ketone group, a (thio)aldehyde group, an amide group, a (thio)carboxylate group, a (thio)carboxylate metal salt group, a carboxylic acid anhydride residue, a carboxylic acid halide residue, and a hydrolysable group containing a primary or secondary amino group or mercapto group. When n4 is 2 or more, then each A¹ may be the same or different. A¹ may alternatively bond to the Si to be a divalent group that forms a cyclic structure. R²¹ represents a monovalent aliphatic or alicyclic hydrocarbon group having from 1 to 20 carbon atoms, or a monovalent aromatic hydrocarbon group having from 6 to 18 carbon atoms. When n1 is 2 or more, then each R²¹ may be the same or different. R²³ represents a monovalent aliphatic or alicyclic hydrocarbon group having from 1 to 20 carbon atoms, a monovalent aromatic hydrocarbon group having from 6 to 18 carbon atoms, or a halogen atom (fluorine, chlorine, bromine, or iodine). When n3 is 2 or more, each R²³ may be the same or different. R²² represents a monovalent aliphatic or alicyclic hydrocarbon group having from 1 to 20 carbon atoms or a monovalent aromatic hydrocarbon group having from 6 to 18 carbon atoms, optionally having a nitrogen atom and/or a silicon atom. When n2 is 2 or more, each R²² may be the same or different, or may bond to each other to form a ring. R²⁴ represents a divalent aliphatic or alicyclic hydrocarbon group having from 1 to 20 carbon atoms, or a divalent aromatic hydrocarbon group having from 6 to 18 carbon atoms. When n4 is 2 or more, each R²⁴ may be the same or different. The hydrolysable group in the hydrolysable group containing a primary or secondary amino group or the hydrolysable group containing a mercapto group is preferably a trimethylsilyl group or a tert-butyldimethylsilyl group, more preferably a trimethylsilyl group.

In some embodiments, the hydrocarbyloxysilane compound represented by the general formula (IV) may be a compound represented by the general formula (V): 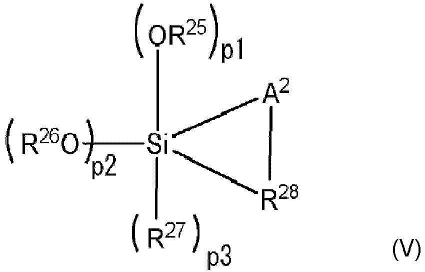 wherein p1 + p2 + p3 = 2 (wherein p2 is an integer of from 1 to 2, and p1 and p3 each are an integer of from 0 to 1); A² represents NR^{a} (where R^{a} represents a monovalent hydrocarbon group, a hydrolysable group or a nitrogen-containing organic group; and the hydrolysable group is preferably a trimethylsilyl group or a tert-butyldimethylsilyl group, more preferably a trimethylsilyl group), or sulfur; R²⁵ represents a monovalent aliphatic or alicyclic hydrocarbon group having from 1 to 20 carbon atoms, or a monovalent aromatic hydrocarbon group having from 6 to 18 carbon atoms; R²⁷ represents a monovalent aliphatic or alicyclic hydrocarbon group having from 1 to 20 carbon atoms, a monovalent aromatic hydrocarbon group having from 6 to 18 carbon atoms, or a halogen atom (fluorine, chlorine, bromine, iodine); R²⁶ represents a monovalent aliphatic or alicyclic hydrocarbon group having from 1 to 20 carbon atoms, a monovalent aromatic hydrocarbon group having from 6 to 18 carbon atoms or a nitrogen-containing organic group, optionally having a nitrogen atom and/or a silicon atom. When p2 is 2, each R²⁶ may be the same or different, or may bond to each other to form a ring. R²⁸ represents a divalent aliphatic or alicyclic hydrocarbon group having from 1 to 20 carbon atoms, or a divalent aromatic hydrocarbon group having from 6 to 18 carbon atoms.

In some embodiments, the hydrocarbyloxysilane compound represented by the general formula (IV) may be a compound represented by the general formula (VI) or (VII): 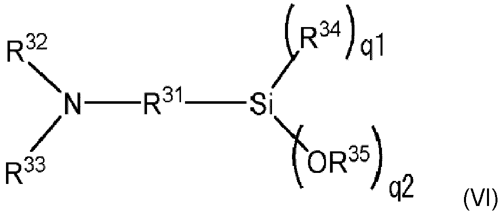 wherein q1 + q2 = 3 (where q1 is an integer of from 0 to 2, and q2 is an integer of from 1 to 3); R³¹ represents a divalent aliphatic or alicyclic hydrocarbon group having from 1 to 20 carbon atoms, or a divalent aromatic hydrocarbon group having from 6 to 18 carbon atoms; R³² and R³³ each independently represent a hydrolysable group, a monovalent aliphatic or alicyclic hydrocarbon group having from 1 to 20 carbon atoms, or a monovalent aromatic hydrocarbon group having from 6 to 18 carbon atoms; R³⁴ represents a monovalent aliphatic or alicyclic hydrocarbon group having from 1 to 20 carbon atoms, or a monovalent aromatic hydrocarbon group having from 6 to 18 carbon atoms. When q1 is 2, then each R³⁴ may be the same or different. R³⁵ represents a monovalent aliphatic or alicyclic hydrocarbon group having from 1 to 20 carbon atoms, or a monovalent aromatic hydrocarbon group having from 6 to 18 carbon atoms. When q2 is 2 or more, then each R³⁵ may be the same or different.

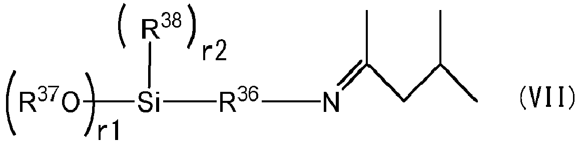

In formula (VII), r1 + r2 = 3 (where r1 is an integer of from 1 to 3, r2 is an integer of from 0 to 2); R³⁶ represents a divalent aliphatic or alicyclic hydrocarbon group having from 1 to 20 carbon atoms, or a divalent aromatic hydrocarbon group having from 6 to 18 carbon atoms; R³⁷ represents a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a monovalent aliphatic or alicyclic hydrocarbon group having from 1 to 20 carbon atoms, or a monovalent aromatic hydrocarbon group having from 6 to 18 carbon atoms. When r1 is 2 or more, then each R³⁷ may be the same or different. R³⁸ represents a hydrocarbyloxy group having from 1 to 20 carbon atoms, a monovalent aliphatic or alicyclic hydrocarbon group having from 1 to 20 carbon atoms, or a monovalent aromatic hydrocarbon group having from 6 to 18 carbon atoms. When r2 is 2, then each R³⁸ may be the same or different.

In other embodiments, the hydrocarbyloxysilane compound represented by the general formula (IV) is a compound having two or more nitrogen atoms represented by the following general formula (VIII) or (IX): 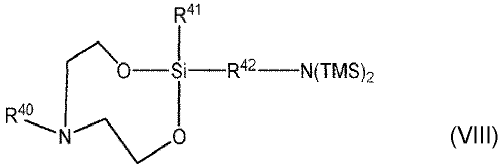 wherein TMS represents a trimethylsilyl group; R⁴⁰ represents a trimethylsilyl group, a monovalent aliphatic or alicyclic hydrocarbon group having from 1 to 20 carbon atoms, or a monovalent aromatic hydrocarbon group having from 6 to 18 carbon atoms; R⁴¹ represents a hydrocarbyloxy group having from 1 to 20 carbon atoms, a monovalent aliphatic or alicyclic hydrocarbon group having from 1 to 20 carbon atoms, or a monovalent aromatic hydrocarbon group having from 6 to 18 carbon atoms; R⁴² represents a divalent aliphatic or alicyclic hydrocarbon group having from 1 to 20 carbon atoms, or a divalent aromatic hydrocarbon group having from 6 to 18 carbon atoms. 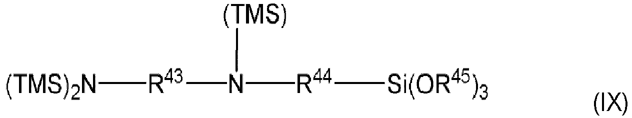 wherein TMS represents a trimethylsilyl group; R⁴³ and R⁴⁴ each independently represent a divalent aliphatic or alicyclic hydrocarbon group having from 1 to 20 carbon atoms, or a divalent aromatic hydrocarbon group having from 6 to 18 carbon atoms; R⁴⁵ represents a monovalent aliphatic or alicyclic hydrocarbon group having from 1 to 20 carbon atoms, or a monovalent aromatic hydrocarbon group having from 6 to 18 carbon atoms, and each R⁴⁵ may be the same or different.

In other embodiments, the hydrocarbyloxysilane compound represented by the general formula (IV) is a hydrocarbyloxysilane compound represented by the general formula (X): 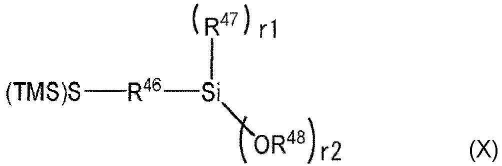 wherein r1 + r2 = 3 (wherein r1 is an integer of from 0 to 2, and r2 is an integer of from 1 to 3); TMS represents a trimethylsilyl group; R⁴⁶ represents a divalent aliphatic or alicyclic hydrocarbon group having from 1 to 20 carbon atoms, or a divalent aromatic hydrocarbon group having from 6 to 18 carbon atoms; R⁴⁷ and R⁴⁸ each independently represent a monovalent aliphatic or alicyclic hydrocarbon group having from 1 to 20 carbon atoms, or a monovalent aromatic hydrocarbon group having from 6 to 18 carbon atoms, and where more than one R⁴⁷ or R⁴⁸ group is present these may be the same or different.

In other embodiments, the hydrocarbyloxysilane compound represented by the general formula (IV) is a compound represented by the general formula (XI): 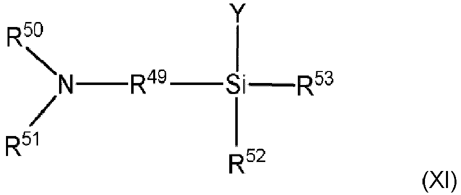 wherein Y represents a halogen atom; R⁴⁹ represents a divalent aliphatic or alicyclic hydrocarbon group having from 1 to 20 carbon atoms, or a divalent aromatic hydrocarbon group having from 6 to 18 carbon atoms; R⁵⁰ and R⁵¹ each independently represent a hydrolysable group, or a monovalent aliphatic or alicyclic hydrocarbon group having from 1 to 20 carbon atoms, or a monovalent aromatic hydrocarbon group having from 6 to 18 carbon atoms, or R⁵⁰ and R⁵¹ bond to each other to form a divalent organic group; R⁵² and R⁵³ each independently represent a halogen atom, a hydrocarbyloxy group, or a monovalent aliphatic or alicyclic hydrocarbon group having from 1 to 20 carbon atoms, or a monovalent aromatic hydrocarbon group having from 6 to 18 carbon atoms. Preferably, R⁵⁰ and R⁵¹ each are a hydrolysable group; and as the hydrolysable group, more preferred is a trimethylsilyl group or a tert-butyldimethylsilyl group, and even more preferred is a trimethylsilyl group.

In one embodiment, the compound of formula (IV) may be N,N-bis(trimethylsilyl)aminopropylmethyldiethoxysilane. In one embodiment, the diene rubber component for use in the invention includes SBR modified by reaction with a coupling agent of formula (IV), for example by reaction with N,N-bis(trimethylsilyl)aminopropylmethyldiethoxysilane.

In other embodiments, the modifying functional group comprises an oxygen atom. Examples thereof include alkoxy groups such as a methoxy group, an ethoxy group, a n-propoxy group, an isopropoxy group, a n-butoxy group, a sec-butoxy group, and a t-butoxy group; alkoxyalkyl groups such as a methoxymethyl group, a methoxyethyl group, an ethoxymethyl group, and an ethoxyethyl group; alkoxyaryl groups such as a methoxyphenyl group and an ethoxyphenyl group; alkylene oxide groups such as an epoxy group and a tetrahydrofuranyl group; trialkylsilyloxy groups such as a trimethylsilyloxy group, a triethylsilyloxy group, and a t-butyldimethylsilyloxy group.

In one embodiment, the diene rubber component comprises a styrene-butadiene copolymer which is end group-functionalised by reaction with a hydrocarbyloxysilane compound and the filler system comprises a first silica which is surface-functionalised with methylglutaric acid. In this embodiment, the hydrocarbyloxysilane compound may be a compound of general formula (IV) as herein described, for example it may be N,N-bis(trimethylsilyl)aminopropylmethyldiethoxysilane.

In one set of embodiments, the diene rubber for use in the invention is one suitable for use in the production of a rubber composition which can be used as a tire component, such as a tire tread. The diene rubber to be used in the invention may, for example, be functionalised or un-functionalised styrene butadiene rubber (SBR).

The mean molecular weight (e.g. weight average, Mw) and/or mean molar mass (e.g. number average, Mn) of the diene rubber may be selected to provide suitable and/or desirable physical properties. For example, it will be appreciated that the viscosity, and thus processability, of a diene rubber compound will increase (e.g. linearly or nonlinearly) with increasing mean molecular weight and/or mean molar mass. Those skilled in the art will appreciate which diene rubber compounds have appropriate mean molecular masses and/or mean molar masses. In some embodiments, the diene rubber component for use in the invention may have a mean molar mass (number average, Mn) of 10,000 to 2,000,000 g/mol, preferably 100,000 to 1,000,000 g/mol.

In some embodiments, the diene rubber component may be an end-group functionalised SBR or SSBR having a mean molar mass (number average, Mn) of 10,000 to 2,000,000 g/mol, preferably 100,000 to 1,000,000 g/mol.

The diene rubber component, for example the end-group functionalised SSBR copolymer, may have a glass transition temperature of -110° C to +20° C, preferably -60° C to 0° C, preferably -40° C to -10° C, preferably -30° C to -15° C, more preferably -22° C to -26° C, for example -22° C, -23° C, -24° C, -25° C, or -26° C.

The selected diene rubber can be used as 100 parts of the rubber in the compositions herein described, or it may be blended with any conventionally employed elastomer for rubber compounding or blends thereof, including both natural and synthetic rubbers. Blends of different diene rubbers may be used. Rubbers suitable for use in any blend are well-known to those skilled in the art and include natural rubber, synthetic polyisoprene rubber, styrene-isoprene rubber, styrene-butadiene rubber, styrene-isoprene-butadiene rubber, butadiene-isoprene rubber, polybutadiene, butyl rubber, neoprene, acrylonitrile-butadiene rubber (NBR), silicone rubber, fluoroelastomers, ethylene acrylic rubber, ethylene-propylene rubber, ethylene-propylene terpolymer (EPDM), ethylene vinyl acetate copolymer, epichlorohydrin rubber, chlorinated polyethylene-propylene rubbers, chlorosulfonated polyethylene rubber, hydrogenated nitrile rubber, and tetrafluoroethylene-propylene rubber. The ratio of any polymer blends can be selected according to need, for example based on the viscoelastic properties of the rubber composition. Those skilled in the art can readily determine which elastomers may be appropriate and their relative amounts to provide a desired viscoelastic property range.

In one set of embodiments, the rubber component for use in the invention is a blend of at least two diene rubbers. For example, it may be a blend of two or more such rubbers. In some embodiments, the diene rubber blend may comprise at least two diene rubber components of the same type but having different (e.g. number average or weight average) molecular weights. In some embodiments, the diene rubber blend may comprise at least two chemically different diene rubber components (e.g. two diene rubbers with different monomeric or repeat units). In some embodiments, the diene rubber blend may comprise at least two diene rubber components which of the same type but which have been made by different polymerisation processes (e.g. solution-based polymerisation or emulsion-based polymerisation). For example, in one set of embodiments, the diene rubber may comprise a combination of two styrene butadiene rubbers, for example a solution-polymerised styrene butadiene rubber (SSBR) and an emulsion-polymerised styrene butadiene rubber (ESBR). By "emulsion-polymerised styrene butadiene rubber" is meant that styrene and 1,3-butadiene are copolymerised as an aqueous emulsion. Such a method is well known and understood by those skilled in the art.

The presence of the ESBR may be considered beneficial to enhance processability of the uncured rubber composition. An emulsion-polymerised styrene butadiene rubber (ESBR) might be used having a conventional styrene content of about 20 to about 29 percent bound styrene. However, in some cases, a higher bound styrene content may be used, for example in the range from about 30 to about 45 percent. A higher styrene content may be beneficial to enhance traction of a tire tread. A non-limiting example of an ESBR for use in the invention is Europrene 1723 (Versalis, Italy).

The solution-polymerised SBR may typically have a bound styrene content in the range of about 5 to about 50 percent, preferably 5 to 40, more preferably 5 to 20. A SSBR provides improved tire rolling resistance due to lower hysteresis when used in a tire tread composition.

The silica filler system herein described can be blended with a diene rubber component, and any other rubber materials as desired, to provide the rubber compositions according to the invention.

Methods for the preparation of the rubber compositions herein described form a further aspect of the invention. In another aspect, the invention thus provides a process for producing a rubber composition, said process comprising the step of dispersing a filler system as herein defined in a diene rubber component.

The amount of the filler system and the diene rubber component can be selected based on the desired physical properties of the resulting rubber composition and may depend on the presence or absence of any other fillers, for example. Suitable amounts can readily be determined by those skilled in the art but may, for example, range from 90 to 130 phr, preferably from 100 to 120 phr, more preferably from 100 to 115 phr, with respect to 100 phr of the rubber composition (where "phr" is parts per hundred parts of the rubber).

The amount of the functionalised silica may be from 55 to 120 phr, preferably from 55 to 100 phr, more preferably from 65 to 90 phr, with respect to 100 phr of the rubber composition. The amount of the second silica may be from 10 to 40 phr, preferably from 20 to 40 phr, more preferably from 20 to 35 phr, with respect to 100 phr of the rubber composition.

Those skilled in the art will appreciate that the amount of the diene rubber component as well as the ratio of the diene rubber component to the filler system dispersed therein can have an advantageous effect on the properties of the rubber composition. In some embodiments, the amount of the diene rubber component may be from 10 to 150 phr, preferably 40 to 120 phr, preferably 50 to 110 phr, more preferably 70 to 110 phr, for example 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109 or 110 phr, with respect to 100 phr of the rubber composition.

In embodiments comprising a binary blend (e.g. a diene rubber composition comprising a first diene rubber compound and a second diene rubber compound), the relative amounts of the diene rubber compounds may readily be determined by those skilled in the art. In one embodiment, the binary blend may comprise a major and a minor component. In such embodiments, the amount of the major diene rubber compound may be from 50 to 140 phr, preferably 60 to 120 phr, more preferably 70 to 100 phr, for example 71, 72, 73, 74, 75, 76, 77, 78, 79, 80, 81, 82, 83, 84, 85, 86, 87, 88, 89, 90, 91, 92, 93, 94, 95, 96, 97, 98, 99 or 100 phr, with respect to 100 phr of the rubber composition. The amount of the minor diene rubber compound may be from 5 to 60 phr, preferably 10 to 50 phr, more preferably 20 to 40 phr, for example 20, 21, 22, 23, 24, 25, 26, 27, 28, 29, 30, 31, 32, 33, 34, 35, 36, 37, 38, 39 or 40 phr, with respect to 100 phr of the rubber composition. In specific embodiments, the major diene rubber compound is a SSBR and the minor diene rubber compound is an ESBR.

In some embodiments, the weight ratio of the diene rubber component to the filler system ranges from 0.50 to 1.20, preferably 0.70 to 1.15, more preferably 0.85 to 1.10, for example, 0.90 to 1.10.

Rubber compositions in which the filler system herein described is dispersed in a rubber matrix can be made using methods known in the art in the manufacture of rubber compositions, such as compounding with other components. These further components can include additional polymers, processing aids (such as oils, waxes, resins and plasticisers), curing systems (such as vulcanising agents, vulcanisation accelerators, and vulcanisation accelerator auxiliaries), anti-degradants (such as antioxidants or antiozonants), pigments, additional fillers, compatibilising agents for the fillers (such as silane coupling agents or covering agents), fibres, etc. Those skilled in the art can readily select a combination of vulcanizable rubber compounds and their respective amounts for subsequent mixing and vulcanization according to the specific rubber product which is desired.

For example, in addition to the diene rubber matrix and silica filler system herein described, a vulcanizable composition may contain one or more of the following: processing aids (e.g. oils), vulcanisation activators (e.g. zinc oxide, stearic acid, etc.), vulcanising agents (e.g. sulfur or sulfur-donating compounds), vulcanisation accelerators, anti-degradants (e.g. anti-oxidants, anti-ozonants, etc.), pigments, additional fillers, compatibilising agents, and silane coupling agents. Zinc oxide and stearic acid function as activators in the vulcanisation process by shortening the vulcanisation time and impact the length and number of cross-links in the rubber matrix that forms during curing or vulcanisation. Depending on the intended use of the sulfur-vulcanized material, these additives can be selected and used in the conventional amounts.

Processing aids improve the processability of the compositions and include oils, such as mineral oils, vegetable oils, synthetic oils, or any mixtures thereof. These may be used in an amount of from about 5 to 75 phr, preferably from about 10 to 50 phr. Typical processing aids include oils, such as aromatic oils. Examples of such oils include Treated Distillate Aromatic Extract (TDAE), Residual Aromatic Extract (RAE), Mild Extract Solvate (MES), and bio-based oil seed derivatives. The oil for use in the rubber compositions of the present invention is not particularly limited and may be any of those known to the person skilled in the art. For example, the oil may be one or more selected from the group consisting of processed oils such as aromatic oils, naphthenic oils and paraffin oils, vegetable oils such as coconut oil, synthetic oils such as alkylbenzene oils and castor oils. Preferably, the oil is an aromatic oil, such as a residual aromatic extract oil.

The vulcanising agent of the rubber compositions is not particularly limited and may be any of those generally known in the art. For example, the vulcanising agent may be sulfur. The amount of the vulcanising agent is not particularly limited, and an amount effective to achieve a satisfactory cure of the composition may readily be selected by those skilled in the art. The vulcanising agent (e.g. sulfur) may be used in an amount in the range from about 0.1 to about 10 phr, preferably from about 0.1 to about 5 phr, e.g. from about 1 to about 3 phr. For example, the rubber composition may contain from 0.1 to 3 phr, preferably from 0.5 to 2 phr, e.g. from 1 to 1.5 phr, of the vulcanising agent.

The vulcanisation accelerator for use in the rubber composition is not particularly limited and may be any of those generally known in the art. Accelerators include thiazoles, dithiocarbamates, thiurams, guanidines, and sulphonamides. Examples of suitable accelerators include thiazole type vulcanization accelerators such as 2-mercaptobenzothiazole (MBT), dibenzothiazyl disulphide (MBTS), N-cyclohexyl-2-benzothiazyl sulfenamide (CBS), and N-tert-butyl-2-benzothiazolyl sulfenamide (TBBS); guanidine type vulcanization accelerators such as 1,3-diphenyl guanidine (DPG); thiuram-based vulcanization accelerators such as tetramethyl thiuram disulphide, tetrabutyl thiuram disulfide, tetradodecyl thiuram disulfide, tetraoctyl thiuram disulfide, and tetrabenzyl thiuram disulfide; and dithiocarbamate compounds such as dimethyl dithiocarbamate zinc; and other dialkyl dithiophosphoric acid zinc. Preferably, the vulcanisation accelerator may be a combination of dibenzothiazyl disulfide (MBTS), N-cyclohexyl-2-benzothiazyl sulfenamide (CBS), and 1,3-diphenyl guanidine (DPG). The amount of vulcanisation accelerator for use in the compositions is not particularly limited and may, for example, be in the range from about 0.5 to about 10 phr, preferably from about 1 to about 8 phr, more preferably from about 2 to about 6 phr. Preferably, the vulcanisation accelerator may comprise dibenzothiazyl disulfide (MBTS) in an amount from 1 to 2 phr, N-cyclohexyl-2-benzothiazyl sulfenamide (CBS) in an amount from 1 to 2 phr, and 1,3-diphenyl guanidine (DPG) in an amount of 2 to 3 phr.

The vulcanisation accelerator auxiliary for use in the rubber compositions is not particularly limited and may be any of those known to the person skilled in the art. For example, the vulcanisation accelerator auxiliary may be zinc oxide (ZnO) and a fatty acid. The fatty acid may be any of saturated or unsaturated, or linear or branched fatty acid. The number of carbon atoms of the fatty acid is also not particularly limited, but may be from 1 to 30, or from 15 to 30. For example, the fatty acid may be one or more selected from the group consisting of cyclohexanoic acids (cyclohexane carboxylic acid), naphthenic acids having a side chain such as alkyl cyclopentane, saturated fatty acids such as hexanoic acid, octanoic acid, decanoic acid (including branched carboxylic acids such as neodecanoic acid), dodecanoic acid, tetradecanoic acid, hexadecanoic acid, and octadecanoic acid (stearic acid), unsaturated fatty acids such as methacrylic acid, oleic acid, linolic acid and linolenic acid, and resin acids such as rosin, tall oil acid and abietic acid. Preferably the vulcanisation accelerator auxiliary of the present invention is zinc oxide (ZnO) and stearic acid. The total amount of the vulcanisation accelerator auxiliary is not particularly limited, but may be from 1 to 10 phr, preferably from 1.5 to 7 phr, for example, from 2 to 5 phr. Preferably, zinc oxide may be used in an amount of from about 1 to about 10 phr, preferably from about 2 to about 5 phr, more preferably from about 2 to about 3 phr. Stearic acid may be used in an amount of from about 1 to about 5 phr, preferably from about 2 to about 3 phr.

Additional reinforcing fillers such as carbon black, carbon nanotubes, short carbon, polyamide, polyester, natural fibres, calcium carbonate, clay, alumina, aluminosilicates, etc. or any mixtures of these may also be present in the rubber compositions of the present invention. Where carbon black is present, this may be furnace black, channel blacks, or lamp blacks. For example, the carbon black may be one or more selected from the group consisting of super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which may be used include acetylene blacks. The carbon black may be in pelletized form or an unpelletized flocculent mass. A specific example of the carbon black for use in the rubber compositions of the present invention is CORAX^{®} N234 supplied by Orion Engineered Carbons. The amount of carbon black that may be present is not particularly limited, but may be from 0.1 to 10 phr, for example from 0.5 to 5 phr, or from 1 to 4 phr, e.g. from 2 to 3 phr.

Advantageously, the only silica-based fillers present in the rubber compositions of the present invention are those of the filler system herein described, i.e. no additional silica is present. The silica system may therefore constitute all of the silica filler material in the composition. It some embodiments, it may constitute all of the reinforcing filler in the rubber composition. However, the presence of additional silica-based fillers or additional non-silica based fillers is not necessarily precluded. Where any additional silica is present, it may be selected from any of those known in the art including, but not limited to, precipitated amorphous silica, wet silica (hydrated silicic acid), dry silica (anhydrous silicic acid), fumed silica, calcium silicate, aluminum silicate, magnesium silicate (e.g. Mg₂SiO₄, MgSiO₃), magnesium calcium silicate (CaMgSiO₄), aluminum calcium silicate (e.g. Al₂O₃.CaO₂SiO₂).

The rubber composition may comprise additional fillers known to those skilled in the art. For example, the rubber compositions may comprise one or more additional fillers selected from the group consisting of aluminum hydroxide, talc, alumina (Al₂O₃), aluminium hydrate (Al₂O₃.H₂O), aluminum hydroxide (Al(OH)₃), aluminum carbonate (Al₂(CO₃)₂), aluminium magnesium oxide (MgOAl₂O₃), pyrofilite (Al₂O₃.4SiO₂.H₂O), bentonite (Al₂O₃.4SiO₂.2H₂O), mica, kaolin, glass balloon, glass beads, calcium oxide (CaO), calcium hydroxide (Ca(OH)₂), calcium carbonate (CaCO₃), magnesium carbonate, magnesium hydroxide (Mg(OH)₂), magnesium oxide (MgO), magnesium carbonate (MgCO₃), potassium titanate, barium sulfate, zirconium oxide (ZrO₂), zirconium hydroxide (Zr(OH)₂.nH₂O), zirconium carbonate (Zr(CO3)₂), crystalline aluminosilicates, reinforcing grades of zinc oxide (i.e. reinforcing zinc oxide). The amount of the further fillers may be from 5 to 200 phr, for example 10 to 150 phr or 25 to 100 phr.

The antidegradant for use in the rubber compositions of the present invention is not particularly limited and may be any of those known to the person skilled in the art. The antidegradant may be an antioxidant and/or an antiozonant. For example, the antidegradant may be one or more selected from the group consisting of N-(1,3-dimethylbutyl)-N'-phenyl-p-phenylenediamine (6PPD) and 2,2,4-trimethyl-1,2-dihydroquinoline polymer (TMQ). Preferably, the antidegradant is a combination of N-(1,3-dimethylbutyl)-N'-phenyl-p-phenylenediamine (6PPD) and 2,2,4-trimethyl-1,2-dihydroquinoline polymer (TMQ). The amount of each antidegradant may be from 0.1 to 3 phr, preferably from 0.2 to 2 phr. The total amount of antidegradant may be from 0.1 to 5 phr, preferably 1 to 3 phr.

Covering agents may be used to reduce the formation of silica aggregates during compounding. If present, these may be used in an amount of up to 5 phr, preferably from about 1 to about 3 phr. In one embodiment, no additional covering agents are present. The covering agent is not particularly limited and may be any of those known in the art. Suitable silica-based covering agents include silanes such as alkylalkoxy silanes, e.g. hexadecyltrimethoxy silane, octyltriethoxy silane and hexyltrimethoxy silane. In one embodiment, the covering agent may be grafted beforehand onto the polymer. It may also be used in the free state (i.e. not grafted beforehand) or grafted to the surface of the silica.

Coupling agents which bind to the silanol groups of silica in order to inhibit the agglomeration thereof and which also function to covalently link the silica fillers to the diene rubber matrix may be present. The appropriate amount of any coupling agent can be determined by those skilled in the art having in mind factors such as its molecular weight, the number of functional groups it contains and its reactivity. Most coupling agents may be used in an isomolar amount based on the amount of silica. The coupling agent for use in the rubber compositions of the present invention is not particularly limited and may be any of those known to the person skilled in the art. In one embodiment, the coupling agent may be grafted beforehand onto the polymer. It may also be used in the free state (i.e. not grafted beforehand) or grafted to the surface of the silica.

Typically, the coupling agent will be a silane coupling agent, for example a bifunctional silane. For example, the silane coupling agent may be one or more selected from the group consisting of bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl)tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, dimethoxymethylsilylpropyl-N,N dimethylthiocarbamoyl tetrasulfide, and dimethoxymethylsilylpropylbenzothiazolyl tetrasulfide. Preferably, the silane coupling agent is bis(3-triethoxysilylpropyl) tetrasulfide. A specific example of the silane coupling agent for use in the invention is Si 69^{®} from Evonik Industries AG. The amount of the silane coupling agent is not particularly limited, but may be from 2 to 20 phr, preferably from 5 to 18 phr, more preferably from 7 to 16 phr, for example from 10 to 16 phr.

The rubber compositions according to the invention may be prepared by methods known in the art and will involve mixing (i.e. compounding) of the diene rubber component, the filler system as herein described and any other components herein described to produce a rubber composition for subsequent vulcanization. According to a further aspect, the invention provides a method of producing a rubber compound by compounding the rubber composition as herein described.

According to a further aspect, the present invention provides a method of producing a rubber product comprising the steps of: compounding the rubber composition as herein described to form a rubber compound; forming (e.g. moulding) the rubber compound into a desired shape; and vulcanising the rubber compound.

In preparing the rubber composition of the invention, the method for combining each of the components is not limited and any of the methods known in the art may be used. For moulding the rubber composition into any desired shape, any known moulding machine such as an extrusion moulding machine or press moulding machine may be used.

Mixing of the components will usually be carried out in stages in which the components may be added. Multi-step mixing processes are generally preferred to optimise dispersion of the silica filler system and may involve the use of more than one mixer, for example different mixers arranged in series. For example, in the case of mixing a tire tread compound, the mixing process may involve an initial mixing stage in which a masterbatch is produced, followed by one or more additional non-productive mixing stages, and finally a productive mixing stage in which the curative agents (i.e. sulfur or sulfur-donating agents and accelerator(s)) are added. Mixers which may be used are well known in the art and include, for example, an open mill or a Banbury type mixer having tangential or intermeshing rotors.

Typically, the rubber, silica filler system, processing aids, zinc oxide, stearic acid, anti-degradants (e.g. anti-oxidants, anti-ozonants), pigments, additional fillers, compatibilising agents, and coupling agents (where present) are mixed to produce the initial masterbatch. This initial masterbatch may be followed by another masterbatch in which additional fillers and additives are added, or by a non-productive mixing stage in which no additional components are added. Any non-productive mixing stage may be used to further disperse the components (e.g. fillers) within the rubber, or to decrease the viscosity of the mixed rubber compound.

During mixing, the temperature is kept below a predetermined level to avoid premature cross-linking of the composition. Typically, the temperature may be kept below 150°C, preferably below 140°C. In producing the initial masterbatch, mixing may for example be carried out a temperature of from about 80 to about 110°C, e.g. about 100°C. In the non-productive mixing stage the temperature may be raised, for example up to about 150°C, e.g. about 130°C. If any additional compatibilising agents are added during mixing, it may be necessary to carry out mixing at higher temperatures to ensure that these react with the silica surface. Mixing times may vary but can readily be determined by those skilled in the art based on the composition of the mixture and the type of mixer used. Generally a mixing time of at least 1 minute, preferably between 2 and 30 minutes, should be sufficient to obtain the desired homogenous composition.

A final mixing stage involves the addition of curatives, including accelerator(s), anti-degradants. The temperature for this mixing stage will generally be lower, for example in the range of from about 40 to about 60°C, e.g. about 50°C. This final mix may also be followed by a further non-productive mixing stage in which no additional components are added.

The most appropriate type of mixing can readily be selected to achieve a vulcanizable rubber compound. Mixing speeds may readily be determined, but may for example range from a speed of from about 20 to about 100 rpm, e.g. from about 30 to about 80 rpm, preferably about 50 rpm.

The vulcanizable rubber compound may be provided as an uncured (so-called "green") tire component for final vulcanisation that cures the composition. Curing to cross-link the rubber components may be carried out by known methods. In the tire industry, for example, an uncured rubber (so-called "green body") is produced followed by curing in a press mold which concurrently cross-links the rubber components and molds the components into a final tire. Vulcanisation cures the rubber by cross-linking, principally via sulfur cross-links. Vulcanisation methods and conditions for hardening the rubber composition are well known to those skilled in the art. Appropriate vulcanisation conditions typically include heating to a temperature in the range from 120 to 200°C, e.g. from 140 to 180°C, for a duration of from 5 to 180 mins, e.g. from 5 to 120 mins.

Vulcanizable rubber compositions form a further aspect of the invention. In another aspect, the invention thus provides a vulcanizable rubber composition comprising a diene rubber component having dispersed therein a filler system as herein defined.

Vulcanised rubber compounds obtained by, directly obtained by, or obtainable by cross-linking any vulcanizable rubber composition as herein described are also part of the invention.

Methods of producing a vulcanised rubber composition also form part of the invention. In another aspect, the invention thus provides a process for producing a vulcanized rubber composition, said process comprising the steps of introducing a silica filler system as herein defined into a diene rubber component whereby to produce a vulcanizable rubber composition; and subjecting said vulcanizable rubber composition to vulcanization by heating to a predetermined temperature and for a predetermined time.

The rubber compositions herein described find particular use in the manufacture of vehicle tires, in particular in the manufacture of tire components such as tire treads. Tire treads may be used for tires for any vehicle, but they find particular use in the manufacture of tire treads for motor cars. Other uses for the rubber compounds include as vibration dampers, sidewall rubbers, inner liner rubbers, bead filler rubbers, body ply rubbers, skim shock rubbers and tread rubbers.

In another aspect, the invention thus provides the use of a rubber composition as herein described as a component of a vehicle tire or in the manufacture of a component of a vehicle tire.

In another aspect, the invention provides a vehicle tire component, such as a tire tread, made from a rubber composition as herein described. A vehicle tire comprising the vehicle tire component also forms part of the invention.

The assembly of the components of a tire and production methods are well-known in the art. Assembly of the "green" tire is followed by compression molding in a suitable mold in which vulcanisation produces the final tire.

The rubber compounds according to the invention may also be used for non-tire applications, such as in the manufacture of hoses and seals.

In the present invention, the replacement of conventional fillers with the silica filler system described herein results in a rubber composition having excellent wear resistance, rolling resistance and wet performance and outstanding balance between these properties for use as tire tread rubber compounds.

The invention is illustrated further by way of the following non-limiting Examples and the accompanying figures, in which:
Figure 1 - Tanδ curves showing tanδ as a function of temperature for rubber composition E1 according to the invention and reference composition CE1.
Figure 2 - Tanδ curves showing tanδ as a function of temperature for rubber composition E2 according to the invention and reference composition CE2.
Figure 3 - Tanδ curves showing tanδ as a function of temperature for rubber composition E3 according to the invention and reference composition CE3.
Figure 4 - Tanδ curves showing tanδ as a function of temperature for rubber composition E4 according to the invention and reference composition CE4.
Figure 5 - Graph showing Wear Index by Bound Rubber (%) as a function of WET/RR Index by tanδ@peak / tanδ @ 60°C for rubber compositions E1 to E4 according to the invention and reference rubber compositions CE1 to CE4.

### Examples

### Test Methods

### Brunauer-Emmet-Teller (BET) specific surface area

The specific surface area of the functionalised silica was measured by the BET method according to the method described in the Journal of the American Chemical Society, Vol. 60, page 309, February 1938, and corresponding to standard NF ISO 5794-1, Appendix D (June 2010).

### Cetyltrimethylammonium bromide (CTAB) adsorption method

The surface area of the functionalised silica was measured by the CTAB method according to ASTM D6845.

### Carbon content (C) of carboxylic acid plus corresponding carboxylate

The content of carboxylic acid plus corresponding carboxylate, denoted (C), expressed as total carbon, may be measured using a carbon/sulfur analyser, such as the Horiba EMIA 320 V2 machine. The principle of the carbon/sulfur analyser is based on the combustion of a solid sample in a stream of oxygen in an induction furnace (adjusted to approximately 170 mA) and in the presence of combustion accelerators (approximately 2 g of tungsten (in particular Lecocel 763-266) and approximately 1 g of iron). The analysis lasts approximately 1 minute. The carbon present in the sample to be analysed (mass of approximately 0.2 g) combines with the oxygen to form CO₂ and CO. These decomposition gases are subsequently analysed by an infrared detector. The moisture from the sample and the water produced during these oxidation reactions is removed by passing through a cartridge comprising a dehydrating agent (magnesium perchlorate) so as not to interfere with the infrared measurement. The result is expressed as a mass percentage of element carbon.

### Object size distribution width ratio Ld

The object size distribution width ratio is the object size distribution width ratio Ld ((d84 - d16)/d50), measured by XDC particle size analysis after ultrasound deagglomeration according to the method described in WO 2015/121333.

### Pore volume distribution

The pore volume distribution is the pore volume distribution ratio V(d5 - d50)/V(d5 - d100) measured according to the method described in WO 2015/121333.

### Functionalised silica pH

The pH of the functionalised silica was measured according to the method described in WO 2015/121333, which is derived from ISO 787/9.

### WET/RR Index as determined by tanδ @ maximum of curve / tanδ at 60°C (i.e. tanδ @ peak / tanδ 60°C)

The loss factor (tangent δ, or tan δ) at different temperatures is used to evaluate rolling resistance and wet traction. Tan δ at lower temperatures is an indicator of wet traction. An increase in tan δ at lower temperatures, when compared to a control compound, correlates with an improvement in wet traction of the tread compound. When developing a rubber composition for a tire tread to improve the rolling resistance of the tire, it is typical to consider the loss tangent (tanδ) near 60°C as an index. Use of a rubber composition with a low tanδ near 60°C in the tread rubber can suppress heat build-up in the tire to reduce rolling resistance and thus improve fuel efficiency of the tire. Tan δ at 60°C is thus an indicator of rolling resistance (RR). A lower result, when compared to a control compound, is indicative of decreased rolling resistance. The WET/RR index is calculated by the ratio of tanδ at the maximum of the curve (i.e. in the low temperature region) ("tanδ@peak") to tanδ at 60°C ("tanδ@60°C"). Dynamic physical testing to determine tan δ was conducted in accordance with the ISO 4664 standard.

### Payne Effect (%)

The Payne Effect provides an indication of the extent of the filler network, i.e. the filler dispersion. The Payne effect was calculated from the compound dynamic properties measured according to the ISO 4664 standard in the stress/strain test at room temperature. The Payne Effect can predict the filler dispersion in the rubber composition from the ratio (expressed in percentage) between ΔE'/E' (0.1 %strain), wherein ΔE' is the difference between the E' (0.1%strain) - E' (4%strain). The lower the Payne Effect, the better the filler dispersion in the rubber composition.

### Bound Rubber (%)

The "bound rubber" provides an indication of filler reinforcement. The so-called "bound rubber" test allows the determination of the proportion of elastomer, in a non-vulcanised composition, which is associated with the reinforcing filler so intimately that this proportion of elastomer is insoluble in the usual organic solvents. Knowledge of this insoluble proportion of rubber, bound to the reinforcing filler during mixing, gives a quantitative indication of the reinforcing activity of the filler in the rubber composition. Quantifying the proportion of rubber associated with the filler can be a predictive tool for the abrasion resistance of the rubber compound. The higher the bound rubber, the higher the abrasion resistance of the rubber compound. This test, well known to those skilled in the art for characterizing the quality of reinforcement provided by the reinforcing filler, has been described in the following documents: Plastics, Rubber and Composites Processing and Applications, Vol. 25, No 7, p. 327 (1996); and Rubber Chemistry and Technology, Vol. 69, p. 325 (1996). In the examples herein, the level of non-extractable elastomer in cyclohexane is measured after swelling for 2 days of a sample of rubber composition (typically 100-200 mg) in this solvent (for example in 20-40 ml of cyclohexane), followed by a drying step of 24 hours at room temperature, before weighing of the rubber composition thus treated. Preferably, the above swelling step is conducted at room temperature (20°C) and away from light. The "bound rubber" content (% by weight) is calculated in a known manner by the difference between the initial weight and the final weight of the rubber composition sample, after taking into account and eliminating, in the calculation, the fraction of intrinsically insoluble components, other than elastomer, initially present in the rubber composition.

### Silica Fillers

A surface-functionalised silica (referred to herein as "VHSA functionalised silica") was prepared according to Example 6 in WO 2015/121333, wherein the amount of methylglutaric acid (MGA) added was 0.40 wt% (expressed as MGA mixture/SiO₂ weight ratio) and the pH was adjusted to be between 3 and 3.7. The properties of the functionalised silica are shown in Table 1 below.

**Table 1**

| **Property** | **VHSA functionalised silica** |
|---|---|
| BET surface area (m²/g) | 286 |
| CTAB surface area (m²/g) | 253 |
| pH | 3.7 |
| Carbon content | 0.15 |
| Object size distribution width ratio (Ld) | 1.11 |
| Pore volume distribution ratio | 0.71 |

A silica without surface modification (referred to herein as "VHSA silica") was obtained from Solvay under the trade name Premium Super Wear (Premium SW) having a BET surface area of 260 m²/g, a CTAB surface area of 250 m²/g, and a carbon content of 0.

A low reinforcing grade silica (referred to herein as "VLSA silica") was obtained from Solvay under the trade name Zeosil^{®} 1085 GR having a BET surface area of 90 m²/g ± 20 m²/g and a CTAB specific surface area of 80 m²/g ± 15 m²/g.

### Rubber compositions

### Materials:

Rubber: Functionalised SSBR: See preparation method below Non-functionalised ESBR: Europrene 1723 (Versalis, Italy)
Carbon Black: Corax^{®} N234 (Orion Engineered Carbons, Luxembourg)
Silane coupling agent - Si69^{®}
Aliphatic resin - Impera E1780 (Eastman, the Netherlands)
Low Tg oil - 2-Ethylhexyl Oleate: Permavis T (Traquisa)
N-(1,3-Dimethylbutyl)-N'-phenyl-p-phenylenediamine (6PPD)
1,3-diphenyl guanidine (DPG)
Sulfur
Dibenzothiazyl disulfide (MBTS)
N-cyclohexyl-2-benzothiazyl sulfenamide (CBS)
Stearic Acid
2,2,4-Trimethyl-1,2-dihydroquinoline polymer (TMQ)
Zinc oxide (ZnO)

The functionalised SSBR was produced according to the following method described in EP 3 725 837: A cyclohexane solution of 1,3-butadiene and a cyclohexane solution of styrene were put into a dried, nitrogen-purged, pressure-tight glass container having a volume of 800 mL, in such a manner that the amount of 1,3-butadiene therein was 67.5 g and that of styrene was 7.5 g. 0.6 mmol of 2,2-ditetrahydrofurylpropane and 0.8 mmol of n-butyllithium were added thereto, and then polymerization was performed at 50°C for 1.5 hours. 0.72 mmol of N,N-bis(trimethylsilyl) aminopropylmethyldiethoxysilane, which is a modifier, was added to the polymerization system in which the polymerization conversion ratio reached almost 100% to perform the reaction of modification at 50°C for 30 minutes. Subsequently, 2 mL of an isopropanol 5% by mass solution of an antioxidant 2,6-di-t-butyl-4-cresol (BHT) was added thereto to stop the polymerization, and the resultant material was dried to give the functionalised SSBR. The functionalised SSBR was measured for its microstructure (vinyl bond content) by the Morello method. The bound styrene content was 10% by weight and the vinyl bond content in butadiene was 40% by weight.

### Examples E1 to E4

Rubber compositions E1 to E4 according to the invention were prepared by compounding the components listed in Table 4. The values in Table 4 are parts by weight based on 100 parts by weight of the rubber composition (PHR). As seen from Table 4, the total amount of the silica filler system decreases from E1 to E4 with an increasing weight ratio of VLSA silica to VHSA functionalised silica.

**Table 4**

| | **PHR** | | | |
|---|---|---|---|---|
| **Materials** | **E1** | **E2** | **E3** | **E4** |
| ESBR (23% Sty, oil ext) | 27.5 | 27.5 | 27.5 | 27.5 |
| SSBR functionalized (10% Sty, dry) | 80.0 | 80.0 | 80.0 | 80.0 |
| CB N234 | 2.0 | 2.0 | 2.0 | 2.0 |
| Si69 | 14.26 | 12.04 | 10.93 | 10 |
| Aliphatic resin | 36.05 | 30.0 | 26.9 | 23.9 |
| 2-Ethylhexyl Oleate | 22.05 | 18.5 | 16.8 | 15.1 |
| 6PPD | 1.6 | 1.6 | 1.6 | 1.6 |
| DPG | 2.7 | 2.7 | 2.7 | 2.7 |
| Sulfur | 1.3 | 1.3 | 1.3 | 1.3 |
| MBTS | 1.5 | 1.5 | 1.5 | 1.5 |
| CBS | 1.5 | 1.5 | 1.5 | 1.5 |
| Stearic Acid | 2.0 | 2.0 | 2.0 | 2.0 |
| TMQ | 0.3 | 0.3 | 0.3 | 0.3 |
| ZnO | 2.0 | 2.0 | 2.0 | 2.0 |
| VHSA functionalised silica | 104 | 84 | 74 | 64 |
| VLSA silica | 16 | 26 | 31 | 36 |
| Weight ratio of VLSA silica: VHSA functionalised silica | 0.15 | 0.31 | 0.42 | 0.56 |
| Total silica filler | 120 | 110 | 105 | 100 |

Compounding of the components was carried out according to the following general procedure:
*Non-productive mixing stage:* all components other than the vulcanization system were added to a Banbury mixer and mixed with the polymer base. During mixing, the temperature was initially maintained between 110°C and 130°C, and subsequently raised to between 150°C and 160°C to effect silanization.
*Productive mixing stage:* The mixture produced in the non-productive mixing stage was mixed with the vulcanization system at a temperature between 90°C and 110°C to effect vulcanisation of the rubber composition.

### Comparative Examples CE1 to CE4

Rubber compositions CE1 to CE4 were prepared by compounding the components listed in Table 5 using the same method as described above for the rubber compositions of Examples E1 to E4. The values in Table 5 are parts by weight based on 100 parts by weight of the rubber composition (PHR). In these compositions, the functionalised silica of compositions E1 to E4 is replaced by a non-functionalised silica filler having the same specific surface area.

**Table 5**

| | **PHR** | | | |
|---|---|---|---|---|
| **Materials** | **CE1** | **CE2** | **CE3** | **CE4** |
| ESBR (23% Sty, oil ext) | 27.5 | 27.5 | 27.5 | 27.5 |
| SSBR functionalized (10% Sty, dry) | 80.0 | 80.0 | 80.0 | 80.0 |
| CB N234 | 2.0 | 2.0 | 2.0 | 2.0 |
| Si69 | 14.26 | 12.04 | 10.93 | 10 |
| Aliphatic resin | 36.05 | 30.0 | 26.9 | 23.9 |
| 2-Ethylhexyl Oleate | 22.05 | 18.5 | 16.8 | 15.1 |
| 6PPD | 1.6 | 1.6 | 1.6 | 1.6 |
| DPG | 2.7 | 2.7 | 2.7 | 2.7 |
| Sulfur | 1.3 | 1.3 | 1.3 | 1.3 |
| MBTS | 1.5 | 1.5 | 1.5 | 1.5 |
| CBS | 1.5 | 1.5 | 1.5 | 1.5 |
| Stearic Acid | 2.0 | 2.0 | 2.0 | 2.0 |
| TMQ | 0.3 | 0.3 | 0.3 | 0.3 |
| ZnO | 2.0 | 2.0 | 2.0 | 2.0 |
| VHSA silica | 104 | 84 | 74 | 64 |
| VLSA silica | 16 | 26 | 31 | 36 |
| Weight ratio of VLSA silica: VHSA silica | 0.15 | 0.31 | 0.42 | 0.56 |
| Total silica filler | 120 | 110 | 105 | 100 |

### Testing of rubber compositions

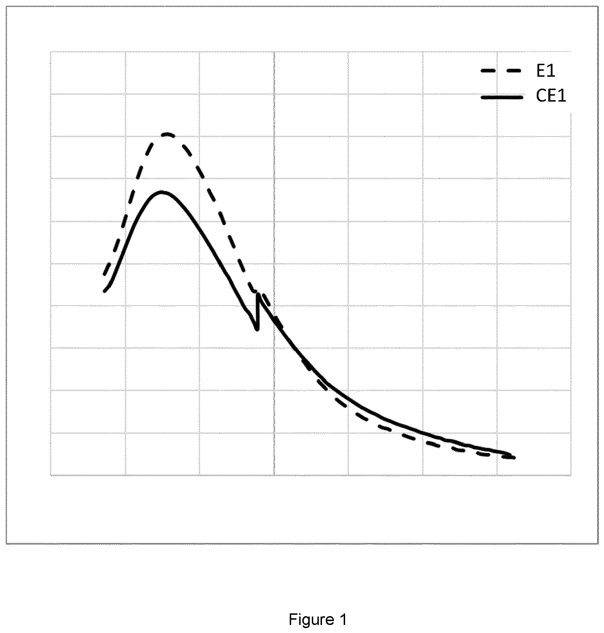

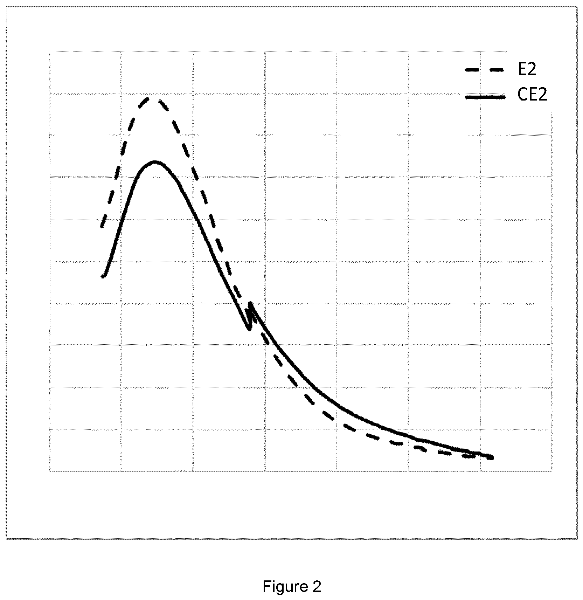

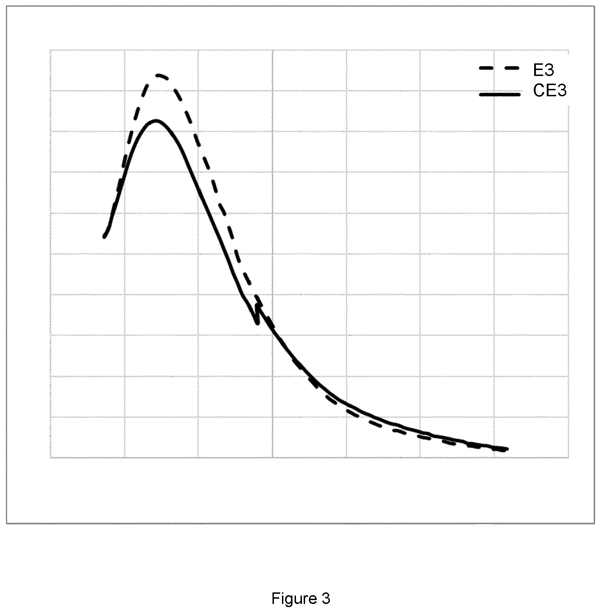

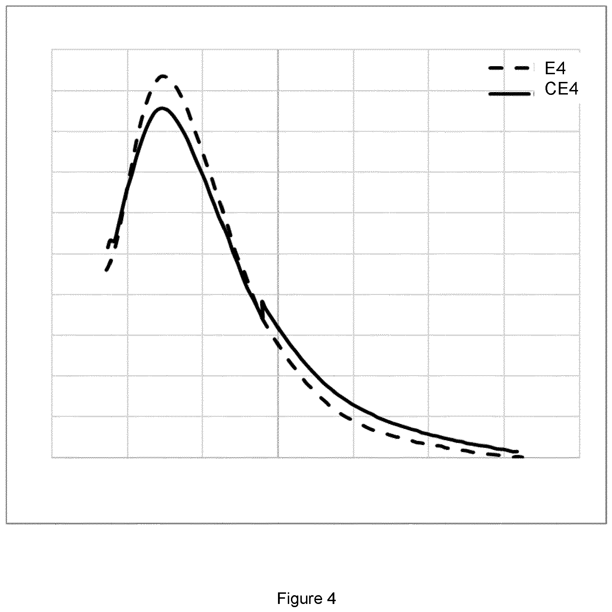

The rubber compositions were subjected to the testing methods described herein. Tanδ was determined across the temperature range of about -45°C to about +65°C. Figures 1 to 4 show tanδ as a function of temperature for each rubber composition according to the invention and the corresponding reference rubber composition (i.e. E1 vs. CE1, E2 vs. CE2, E3 vs. CE3 and E4 vs. CE4). The scale of the tanδ and temperature axes in each of Figures 1 to 4 is the same.

In Figures 1 to 4, it can be seen that as the weight ratio between the low surface area (VLSA) filler and the high surface area (VHSA) silica filler increases (by increasing the amount of VLSA filler and decreasing the amount of VHSA filler) the peak value of tanδ increases and the value of tanδ at 60°C decreases. As discussed above, a rubber composition with a low tanδ near 60°C can suppress heat build-up in the tire tread to reduce rolling resistance. This effect is observed with a reduced total amount of silica filler. This effect is enhanced in the compositions according to the invention compared to the reference rubber compositions.

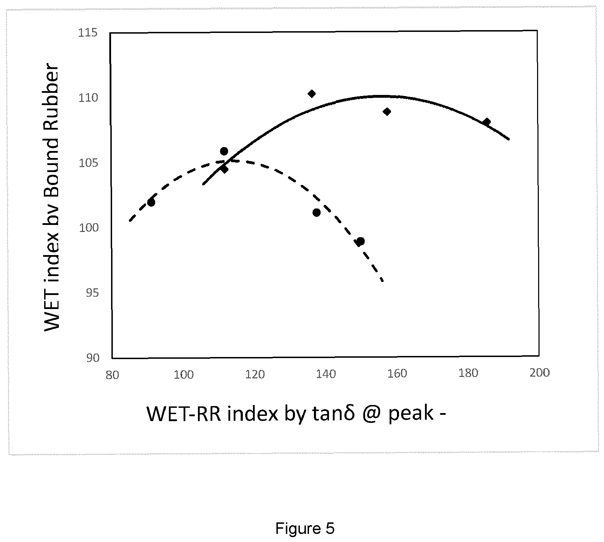

Table 6 shows the results for filler dispersion, WET/RR Index and WEAR Index for the rubber compositions E1 to E4 and CE1 to CE4. Figure 5 graphically represents the relationship between the Wear Index by Bound Rubber (%) and WET/RR Index by tanδ @ peak / tanδ @ 60°C (%) for all compositions.

**Table 6**

| **Rubber Composition** | **Filler dispersion index by Payne Effect (%)** | **WET/RR Index by tanδ @ peak / tanδ @ 60°C (%)** | **WEAR Index by Bound Rubber (%)** |
|---|---|---|---|
| **E1** | 125 | 112 | 104 |
| **E2** | 124 | 137 | 110 |
| **E3** | 154 | 158 | 109 |
| **E4** | 140 | 186 | 108 |
| **CE1** | 89 | 91 | 102 |
| **CE2** | 104 | 112 | 106 |
| **CE3** | 127 | 138 | 101 |
| **CE4** | 127 | 150 | 99 |

When comparing each rubber composition according to the invention with its corresponding reference rubber composition, it is observed that the WET/RR Index (%) is higher. In a similar manner, the WEAR Index by Bound Rubber (%) is improved for each rubber composition according to the invention compared to the corresponding reference composition.

Surprisingly, the increase in "VLSA" improves wear performance in the compositions according to the invention compared to the reference compositions. Whilst not wishing to be bound by theory, the different trends observed for the "functionalised VHSA" silica compared to the "VHSA" suggests that the presence of the carboxyl groups on the modified silica surface helps to produce a more homogenous packing of small silica ("VHSA") particles within the larger ("VLSA") ones. This leads to a rubber composition in which areas of non-reinforced rubber are absent (or at least reduced), hence better wear performance. This behaviour is quite evident at all tested weight ratios of the silica fillers and is optimum at a ratio of 0.31.

## Claims

1. A rubber composition comprising:
a diene rubber component; and
a filler system, wherein the filler system comprises:
a first silica which is surface-functionalised and has a BET specific surface area of from 250 to 310 m²/g and a CTAB specific surface area of from 230 to 285 m²/g; and
a second silica which is not surface-functionalised and has a BET specific surface area of from 60 to 120 m²/g and a CTAB specific surface area of from 55 to 105 m²/g.

2. A rubber composition as claimed in claim 1, wherein the weight ratio between the second silica and the first silica is from 0.15 to 0.60, preferably from 0.25 to 0.45.

3. A rubber composition as claimed in claim 1 or claim 2, wherein the filler system is present in a range from 90 to 130 phr, preferably from 100 to 120 phr, more preferably from 100 to 115 phr, with respect to 100 phr of the rubber composition.

4. A rubber composition as claimed in any one of the preceding claims, wherein:
the first silica is present in a range from 55 to 120 phr, preferably from 55 to 100 phr, more preferably from 65 to 90 phr, with respect to 100 phr of the rubber composition; and/or
the second silica is present in a range from 10 to 40 phr, preferably from 20 to 40 phr, more preferably from 20 to 35 phr, with respect to 100 phr of the rubber composition.

5. A rubber composition as claimed in any one of the preceding claims, wherein the first silica is surface-functionalised with one or more carboxylic acid groups, or salts or derivatives thereof.

6. A rubber composition as claimed in claim 5, wherein the first silica is surface-functionalised with one or more polycarboxylic acids, preferably wherein the one or more polycarboxylic acids are selected from the group consisting of adipic acid, succinic acid, ethylsuccinic acid, glutaric acid, methylglutaric acid, oxalic acid, and citric acid.

7. A rubber composition as claimed in any one of the preceding claims, wherein the first silica is further **characterised by** one or more of the following properties:
- a carbon content of at least 0.10% by weight of the functionalised silica, preferably at least 0.15% by weight, more preferably at least 0.20% by weight, yet more preferably at least 0.25% by weight, e.g. at least 0.30% by weight;
- an object size distribution width ratio (Ld) of at least 0.91, preferably at least 0.94, e.g. at least 0.98;
- a pore volume distribution ratio of at least 0.65, preferably at least 0.66, e.g. at least 0.68.

8. A rubber composition as claimed in any one of the preceding claims, wherein the pH of the first silica ranges from 2.5 to 7, preferably from 2.5 to 5, more preferably from 3 to 4.5.

9. A rubber composition as claimed in any one of the preceding claims, wherein the diene rubber component comprises at least one styrene-butadiene copolymer (SBR), preferably at least one solution-polymerised styrene-butadiene copolymer (SSBR).

10. A rubber composition as claimed in claim 9, wherein the styrene-butadiene copolymer is an end-group functionalised SSBR, preferably an end-group functionalised SSBR having a Tg in the range from -65 to -15°C.

11. A rubber composition as claimed in claim 9 or claim 10, wherein the diene rubber component further comprises at least one additional diene rubber polymer, for example an additional styrene-butadiene rubber (SBR), a butadiene rubber (BR), a natural rubber (NR), or an isobutylene-isoprene rubber (IIR), preferably wherein the diene rubber component comprises a blend of a solution-polymerised styrene-butadiene rubber copolymer (SSBR) and an emulsion-polymerised styrene-butadiene rubber copolymer (ESBR).

12. A rubber composition as claimed in any one of the preceding claims, wherein the first silica is surface-functionalised with methylglutaric acid, and the diene rubber component comprises a styrene-butadiene copolymer which is end group-functionalised with a hydrocarbyloxysilane compound,
preferably wherein the hydrocarbyloxysilane compound is a compound of general formula (IV): 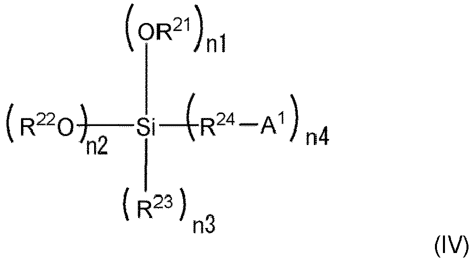 wherein:
n1 + n2 + n3 + n4 = 4, provided that n2 is an integer from 1 to 4 and n1, n3, and n4 each are an integer of from 0 to 3;
A¹ represents at least one functional group selected from a saturated cyclic tertiary amine compound residue, an unsaturated cyclic tertiary amine compound residue, a ketimine residue, a nitrile group, a (thio)isocyanate group (representing an isocyanate group or a thioisocyanate group), a (thio)epoxy group, a trihydrocarbyl isocyanurate group, a dihydrocarbyl carbonate group, a nitrile group, a pyridine group, a (thio)ketone group, a (thio)aldehyde group, an amide group, a (thio)carboxylate group, a (thio)carboxylate metal salt group, a carboxylic acid anhydride residue, a carboxylic acid halide residue, and a hydrolysable group containing a primary or secondary amino group or mercapto group;
when n4 is 2 or more, then each A¹ may be the same or different;
or A¹ may bond to the Si to be a divalent group that forms a cyclic structure;
R²¹ represents a monovalent aliphatic or alicyclic hydrocarbon group having from 1 to 20 carbon atoms, or a monovalent aromatic hydrocarbon group having from 6 to 18 carbon atoms;
when n1 is 2 or more, then each R²¹ may be the same or different;
R²³ represents a monovalent aliphatic or alicyclic hydrocarbon group having from 1 to 20 carbon atoms, a monovalent aromatic hydrocarbon group having from 6 to 18 carbon atoms, or a halogen atom ;
when n3 is 2 or more, each R²³ may be the same or different;
R²² represents a monovalent aliphatic or alicyclic hydrocarbon group having from 1 to 20 carbon atoms or a monovalent aromatic hydrocarbon group having from 6 to 18 carbon atoms, optionally having a nitrogen atom and/or a silicon atom;
when n2 is 2 or more, each R²² may be the same or different, or may bond to each other to form a ring;
R²⁴ represents a divalent aliphatic or alicyclic hydrocarbon group having from 1 to 20 carbon atoms, or a divalent aromatic hydrocarbon group having from 6 to 18 carbon atoms;
when n4 is 2 or more, each R²⁴ may be the same or different; and
optionally, the compound of formula (IV) is N,N-bis(trimethylsilyl)aminopropylmethyldiethoxysilane.

13. A rubber composition as claimed in any one of claims 9 to 12, wherein the solution-polymerised styrene-butadiene rubber copolymer (SSBR) is present in a range from 60 to 100 phr, preferably from 70 to 90 phr, with respect to 100 phr of the rubber composition.

14. A rubber composition as claimed in any one of the preceding claims, wherein the rubber composition is vulcanised.

15. A tire comprising a tire component made from a rubber composition as claimed in any one of claims 1 to 14.
